(19) Europäisches Patentamt
European Patent Office
Office européen des brevets

(11) EP 1 391 414 B1

(12) **EUROPEAN PATENT SPECIFICATION**

(45) Date of publication and mention of the grant of the patent:
**31.03.2010 Bulletin 2010/13**

(21) Application number: **01967759.0**

(22) Date of filing: **20.09.2001**

(51) Int Cl.:
***B66B 13/30*** *(2006.01)* ***E06B 5/16*** *(2006.01)*

(86) International application number:
**PCT/JP2001/008201**

(87) International publication number:
**WO 2002/096793 (05.12.2002 Gazette 2002/49)**

(54) **DOOR INSTALLED AT PLATFORM FOR ELEVATOR**

AUF EINER AUFZUGSPLATTFORM EINGESETZTE TÜR

PORTE INSTALLEE SUR UNE PLATE-FORME D'ASCENSEUR

(84) Designated Contracting States:
**DE FR GB NL**

(30) Priority: **25.05.2001 JP 2001156826**

(43) Date of publication of application:
**25.02.2004 Bulletin 2004/09**

(73) Proprietor: **MITSUBISHI DENKI KABUSHIKI KAISHA**
**Chiyoda-ku**
**Tokyo 100-8310 (JP)**

(72) Inventors:
- **MORI, Akinobu**
**Chiyoda-ku,**
**Tokyo 100-8310 (JP)**
- **HARAGA, Kosuke**
**Chiyoda-ku,**
**Tokyo 100-8310 (JP)**
- **SUZUKI, Toshiya**
**Chiyoda-ku,**
**Tokyo 100-8310 (JP)**
- **HARUNA, Kazushi**
**Chiyoda-ku,**
**Tokyo 100-8310 (JP)**

(74) Representative: **HOFFMANN EITLE**
**Patent- und Rechtsanwälte**
**Arabellastrasse 4**
**81925 München (DE)**

(56) References cited:
**EP-A- 1 258 518**
**JP-A- 10 501 009**
**JP-A- 2001 097 657**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 391 414 B1

## Description

TECHNICAL FIELD

The present invention relates to a landing door for an elevator having a front panel and a reinforcing member attached to the back side of the front panel.

BACKGROUND ART

Generally, a landing door for an elevator is a door that is attached on the side of a building and required to have the function as a fire door that prevents a fire occurring on the side of the building from spreading to the other stories through a hoistway. For this reason, a landing door for an elevator having a front panel made of metal and a reinforcing member made of metal welded thereto has conventionally been used.

However, once a fire has occurred on the side of the building, the temperature of the front panel surface becomes higher than that of the reinforcing member, so that the landing door warps as if it was swelled. Also, if this warp is enlarged, a gap is formed between the building and the landing door and flame will enter the hoistway through the gap.

To decrease such a warp of the landing door, it has been a conventional measure to increase the rigidity of the landing door as a whole as by increasing the thicknesses of the front panel and of the reinforcing member or by increasing the number of the reinforcing members.

However, increasing the rigidity as by the above-mentioned method will result in an increase in the weight of the landing door. In addition, an increase in the number of welding spots will make the production process complicated and cause an increased welding distortion.

On the other hand, JP-U-57-120574 A discloses a wall panel for a car having a front panel to which a reinforcing member is bonded. For the wall panel, for example, acrylic adhesives, urethane adhesives or epoxy adhesives are used.

However, since the landing door is required to have the function as a fire door as described above, it has been difficult to adopt a panel with an adhesive therefor.

That is, conventional adhesives catch fire at high temperatures and their combustion continues until they are burned out, so that they could not satisfy the prescription stating that the "flame shall vanish within 10 seconds from the inflammation" (British Standard BS476). Furthermore, the conventional adhesives could neither satisfy the prescription stating that "smoking must not continue for 15 minutes or more from the occurrence of a fire" (European Standard EN81-8).

Furthermore, EP-A-1 258 518, which forms part of the state of the art according to Article 54(3) EPC, discloses a flame - retardant curable adhesive composition for a panel for elevators. The adhesive composition has low tuning properties, good flame retardancy, as well as obtaining a high distortion resistance.

DISCLOSURE OF THE INVENTION

The present invention has been made to solve the problems as described above and is aimed at obtaining a landing door for an elevator that prevents inflammation or quickly extinguishes it, if inflammation occurs, produces a less amount of smoke, shows a shortened smoking time and is useful as a fire door.

According to the present invention as defined by claim 1, the landing door for an elevator includes a front panel and a reinforcing member that is bonded to the back side of the above-mentioned front panel through an adhesive layer made of an organic adhesive containing a flame retardant.

BRIEF DESCRIPTION OF THE DRAWINGS

Fig. 1 is a perspective view showing a landing door for an elevator according to Embodiment 1 of the present invention, as seen from the backside thereof;
Fig. 2 is a cross-sectional view along the line II-II of Fig. 1;
Fig. 3 is a cross-sectional view showing a landing door for an elevator according to Embodiment 2 of the present invention;
Fig. 4 is a cross-sectional view showing a landing door for an elevator according to Embodiment 3 of the present invention;
Fig. 5 is a cross-sectional view showing a landing door for an elevator according to Embodiment 4 of the present invention; and
Fig. 6 is a perspective view showing a landing door for an elevator according to Embodiment 5 of the present

invention, as seen from the backside thereof.

BEST MODE FOR CARRYING OUT THE INVENTION

Hereinafter, the present invention will be described by preferred embodiments with reference to the attached drawings.

Embodiment 1

Fig. 1 is a perspective view showing a landing door for an elevator according to Embodiment 1 of the present invention, as seen from the backside thereof; and Fig. 2 is a cross-sectional view along the line II-II of Fig. 1.

In the figures, a front panel 21 made of metal has a flat panel section 21a opposing a platform when the door is closed, side sections 21b and 21c provided on both width direction ends of the flat panel section 21a, an upper section 21d provided on an upper end of the flat panel section 21a, a lower section 21e provided on a lower end of the flat panel section 21a, an upper folded section 21f provided on an end of the upper section 21d, and a lower folded section 21g provided on an end of the lower section 21e.

The side sections 21b and 21c, the upper section 21d and the lower section 21e, respectively, extend at right angles to the flat panel section 21a. The upper folded section 21f and the lower folded section 21g extend at right angles to the upper section 21d and the lower section 21e, respectively, and oppose the backside of the flat panel section 21a. Further, the flat panel section 21a, the side sections 21b and 21c, the upper section 21d, the lower section 21e, the upper folded section 21f, and the lower folded section 21g are each formed by bending a single metal plate.

To the backside of the front panel 21, a reinforcing member 22 made of metal is fixed. The reinforcing member 22 has a pair of bond-fixing sections 22a and 22b that are connected to the backside of the flat panel section 21a, an upper abutting section 22c that is abutted against the upper folded section 21f, and a lower abutting section 22d that is abutted against the lower folded section 21g.

The bond-fixing sections 22a and 22b are connected to the backside of the flat plate section 21a through an adhesive layer 23. The adhesive layer 23 is made of an organic adhesive containing ammonium polyphosphate, which is a flame retardant.

The upper abutting section 22c is fixed to the upper folded section 21f with rivets 24. The rivets 24, which prevent the reinforcing member 22 from being completely disengaged from the front panel 21, may be, for example, a welded part.

Thus, in the landing door of Embodiment 1, in order to exhibit the function as a fire door, the front panel 21 and the reinforcing member 22 are constituted by metal materials having sufficient fire resistance and the upper abutting section 22c is fixed to the upper folded section 21f by means of the rivets 24.

Also, in Embodiment 1, the reinforcing member 22 is bonded to the backside of the front panel 21 through the adhesive layer 23 made of an organic adhesive containing ammonium polyphosphate. Such an organic adhesive has a decreased adhesive strength at high temperatures and becomes weaker in peel force than in shear force. As a result, in a short time from the occurrence of a fire, the warping force of the front panel 21 can separate the reinforcing member 22 from the front panel 21 to prevent the warping of the front panel 21.

Also, the separation of the reinforcing member 22 from the front panel 21 allows the organic adhesive that constitutes the adhesive layer 23 to contact the air directly to facilitate its combustion. Therefore, the organic adhesive can be burned out in a short time, so that smoking can be made to finish in a short time.

In addition, the connection by means of the organic adhesive is easier in production than the connection by means of weld connection with metallic materials.

Thus, use of the organic adhesive containing ammonium polyphosphate as a flame retardant can prevent inflammation, or can extinguish flame within 10 seconds from the inflammation and can reduce the amount of smoke. The content of ammonium polyphosphate is 20 to 43% by weight, desirably 23 to 38% by weight. If the content is less than the above-mentioned range, the flame extinguishing effect at the time of inflammation is decreased while if the content is more than the above-mentioned range, the strength and durability, in particular the humidity resistance, as an adhesive are decreased.

Note that even when ammonium polyphosphate is used as a mixture with other flame retardants, the above-mentioned prescription of BS476 and that of EN81-8 can still be satisfied. However, since the more the amount of ammonium polyphosphate, the less the amount of smoke, it is preferable that ammonium polyphosphate be used alone, which makes the amount of smoke minimal.

Further, the thickness of the adhesive layer 23 is 0.03 to 1.0 mm, desirably 0.08 to 0.5 mm. If the thickness is smaller than the above-mentioned range, the adhesive strength against peel force or impact force is decreased while if it is larger than the above-mentioned range, not only the adhesive strength under shear is decreased but also the amount of smoke increases.

Furthermore, use of a two-pack room temperature curing adhesive as a main component of the organic adhesive can give rise to high adhesive strength under shear, high adhesive strength under peel, and high adhesive strength under impact in the ordinary use environment of an elevator. In addition, when the temperature is elevated by a fire, the adhesive strength can be abruptly decreased to quickly peel the reinforcing member 22 off.

Embodiment 2

Fig. 3 is a cross-sectional view showing a landing door for an elevator according to Embodiment 2 of the present invention. In this figure, a primer layer 25 is interposed between the flat panel section 21a of the front panel 21 and the adhesive layer 23.
Such a landing door is produced by coating a primer to a small thickness on a bonding part on the backside of the flat panel section 21a and then bonding thereto the reinforcing member 22 through the bonding layer 23 made of an organic adhesive containing a flame retardant.
The primer increases the adhesive strength between the metal and the adhesive. Use of, for example, a hydrated organic phosphoric acid compound can increase the adhesive strength of the acrylic adhesive with the metal.
That is, provision of the primer layer 25 makes the adhesive strength between the front panel 21 and the adhesive layer 23 higher than that between the reinforcing member 22 and the adhesive layer 23. As a result, at the time of a fire, the reinforcing member 22 peels off from the adhesive layer 23 in a state where the adhesive layer 23 remains to be attached to the backside of the front panel 21. In addition, after the reinforcing member 22 is peeled off, the temperature on the backside of the front panel 21 increases rapidly as compared with that of the reinforcing member 22, resulting in that the adhesive layer 23 remaining to be attached to the front panel 21 is burned and carbonized in a short time. As a result, the time of smoking can be shortened and the inflammation time can be kept within 10 seconds.

Embodiment 3

Next, Fig. 4 is a cross-sectional view showing a landing door for an elevator according to Embodiment 3 of the present invention. In this figure, a thermoplastic resin layer 26 is provided between each of the bond-fixing sections 22a and 22b and the adhesive layer 23 of the reinforcing member 22.
Such a landing door can be produced by coating a thermoplastic resin to a small thickness on a part of each of the bond-fixing sections 22a and 22b and cooling it to solidify to form thermoplastic resin layers 32, and then bonding the reinforcing member 22 to the front panel 21 through an adhesive layer 23.
The thermoplastic resin is softened and molten in a short time when the temperature of the adhesive layer 23 is elevated at the time of a fire. For this reason, at the time of a fire, the reinforcing member 22 peels off from the adhesive layer 23 in a state where the adhesive layer 23 remains to be attached to the backside of the front panel 21. In addition, after the reinforcing member 22 is peeled off, the temperature on the backside of the front panel 21 increases rapidly as compared with that of the reinforcing member 22, resulting in that the adhesive layer 23 remaining to be attached to the front panel 21 is burned and carbonized in a short time. As a result, the time of smoking can be shortened and the inflammation time can be kept within 10 seconds.
On this occasion, if the thermoplastic resin has a softening temperature of 60˚C to 100˚C, it has a sufficient adhesive strength in the ordinary use environment of an elevator and when temperature elevation starts at the time of a fire, the reinforcing member 22 can be quickly peeled off in a short time.

Embodiment 4

Next, Fig. 5 is a cross-sectional view showing a landing door for an elevator according to Embodiment 4 of the present invention. In Embodiment 4, the primer layer 25 is interposed between the front panel 21 and the adhesive layer 23 and the thermoplastic resin layer 26 is provided between the reinforcing member 22 and the adhesive layer 23. Thus, use of the primer layer 25 and the thermoplastic resin layer 26 in combination makes it possible to peel off the reinforcing member 22 from the adhesive layer 23 more positively in a state where the adhesive layer 23 remains to be attached to the backside of the front panel 21.
Note that also in Embodiments 2 to 4, use of the organic adhesive containing ammonium polyphosphate used in Embodiment 1 can give rise to the same effect as that obtained in Embodiment 1.

Example 1

Next, Example 1 relating to the above-mentioned Embodiment 1 will be described. In Example 1, a landing door having a size of 785 mm in width × 2,525 mm in height was produced.
First, a steel plate of a thickness of 1.6 mm was worked to obtain the front panel 21. On the other hand, a steel

plate of a thickness of 1.6 mm was worked to provide two reinforcing members 22 in the form of a hat in cross-section. That is, although only one reinforcing member 22 is shown in Fig. 1, in Example 1, two reinforcing members 22 were fixed to the backside of the front panel 21 in parallel to each other.

Each of the upper abutting sections 22c was fixed to the upper folded section 21f by means of the two rivets 24. As the rivets 24, steel-made rivets of a diameter of 4.8 mm were used.

For the adhesive layer 23, use was made of one containing as a main component a two-pack room temperature curing acrylic adhesive having a glass transition temperature of 68˚C (tan δ peak of viscoelasticity measurement) and 31% by weight of ammonium polyphosphate alone as a flame retardant (trade name: Hardlock C375, manufactured by Denki Kagaku Kogyo Kabushiki Kaisha). The adhesive layer 23 was formed by coating to a thickness of 0.2 mm.

Then, the landing door of Example 1 was begirded by fiber-mixed calcium silicate plates of a thickness of 24 mm and attached to a fire resistance test heating furnace. The door was heated from the side of the front panel 21 according to the heat elevation formula prescribed by the prescription in BS746 as shown by the following expression. Note that in the formula, t is a heating time (minute).

$$T\ (^{\circ}C) = 345 \cdot \log\ (8t + 1) + 20$$

As a result of the fire resistance test, the reinforcing member 22 was peeled off after 2 minutes from the start of the heating. At this moment, the temperature of the front panel 21 in a central part of the backside was 120˚C and the warp amount was 25 mm (the warp amount being measured in the central part of the backside of the front panel 21). Thereafter, heating was continued up until 132 minutes but no inflammation occurred in the adhesive layer 23.

Note that after 4 minutes from the start of the tests, the adhesive layer 23 began to smoke but the smoking was ceased within 15 minutes from the start of the tests. Also, the amount of smoke was small so that no interruption of sight could occur.

Observation of the adhesive layer 23 after completion of the tests revealed that all the adhesive layer 23 that was attached to the front panel 21 and the reinforcing member 22 was carbonized.

Note that, the backside of the landing door is shown in Fig. 1 in a simplified manner, however the front panel 21 in actuality had a door hanger, which was made of a steel plate capable of attaching rollers, etc. thereto, and was attached to the upper part thereof. On the other hand, the lower part of the front panel 21 in actuality had welded thereto a lower structural member made of a steel plate capable of attaching thereto a rail guide or the like. Furthermore, the reinforcing member 22 was fastened with a hanger member and the rivets 24.

Example 2

Next, Example 2 relating to the above-mentioned Embodiment 2 will be described. In Example 1, the primer layer 25 was formed on the bonding part on the backside of the front panel 21 before the reinforcing member 22 was bonded to the front panel 21. The primer layer 25 formed by coating a 3% solution whose main component was a hydrated organic phosphoric acid compound with a brush to a small thickness and drying to remove the solvent. Thus, a landing door was produced in the same manner as in Example 1 except that the primer layer 25 was formed.

When the landing door was subjected to the fire resistance tests as those in Example 1, the reinforcing member 22 was peeled off after about 2.5 minutes from the start of the tests. At this moment, the temperature of the front panel 21 in a central part of the backside was 160˚C and the warp amount was 31mm. Thereafter, the heating was continued up until 132 minutes but no inflammation occurred in the adhesive layer 23.

Note that after 3 minutes from the start of tests, the adhesive layer 23 began to smoke but the smoking was ceased within 10 minutes from the start of the tests. Observation of the adhesive layer 23 after completion of the tests revealed that most of the adhesive 23 was attached onto the side of the front panel 21 and was carbonized completely.

Thus, use of the primer layer 25 containing a hydrated organic phosphoric acid compound as a main component can shorten, in particular, the smoking time.

Example 3

Next, Example 3 relating to the above-mentioned Embodiment 3 will be described. In Example 1, the thermoplastic resin layer 26 was formed on the bonding part for the reinforcing member 22 before the reinforcing member 22 was bonded to the front panel 21. The thermoplastic resin layer 26 was formed by melting a thermoplastic adhesive made of an ethylene/vinyl acetate copolymer having a softening temperature of 90˚C (trade name: Evaflex, manufactured by Mitsui-Du Pont Polychemicals Co., Ltd.) at 180˚C and coating it to a thickness of 0.1 mm, followed by cooling it to solidify it. A landing door was produced in the same manner as in Example 1 except that the thermoplastic resin layer

26 was formed.

When the landing door was subjected to the fire resistance tests as those in Example 1, the reinforcing member 22 was peeled off after about 2 minutes from the start of the tests. At this moment, the temperature of the front panel 21 in a central part of the backside was 120˚C and the warp amount was 31mm. Thereafter, the heating was continued up until 132 minutes but no inflammation occurred in the adhesive layer 23.

Note that after 3 minutes from the start of tests, the adhesive layer 23 began to smoke but the smoking was ceased within 10 minutes from the start of the tests. Observation of the adhesive layer 23 after completion of the tests revealed that most of the adhesive layer 23 was attached on the side of the front panel 21 and was carbonized completely.

Thus, use of the thermoplastic resin layer 26 having a softening temperature of 60˚C to 100˚C can shorten, in particular, the smoking time.

Example 4

Next, Example 4 relating to the above-mentioned Embodiment 4 will be described. In Example 1, the primer layer 25 was formed on the bonding part on the backside of the front panel 21 and the thermoplastic resin layer 26 was formed on the bonding part for the reinforcing member 22 before the reinforcing member 22 was bonded to the front panel 21. The primer layer 25 was formed in the same manner as in Example 2. On the other hand, the thermoplastic resin layer 26 was formed in the same manner as in Example 3. A landing door was produced in the same manner as in Example 1 except that the primer layer 25 and the thermoplastic resin layer 26 were formed.

When the landing door was subjected to the fire resistance tests as those in Example 1, the reinforcing member 22 was peeled off after about 2.5 minutes from the start of the tests. At this moment, the temperature of the front panel 21 in a central part of the backside was 160˚C and the warp amount was 31mm. Thereafter, the heating was continued up until 132 minutes but no inflammation occurred in the adhesive layer 23.

Note that after 3 minutes from the start of tests, the adhesive layer 23 began to smoke but the smoking was ceased within 10 minutes from the start of the tests. Observation of the adhesive layer 23 after completion of the tests revealed that most of the adhesive layer 23 was attached on the side of the front panel 21 and was carbonized completely.

Comparative Example 1

Next, Comparative Example 1 will be described. In comparative Example 1, the flame retardant contained in the adhesive layer 23 in Example 1 was replaced by a phosphate-based flame retardant. A landing door was produced in the same manner as in Example 1 except therefor.

The landing door was subjected to the same fire resistance tests as those in Example 1. As a result, no inflammation occurred up until 132 minutes but after 3 minutes from the start of the tests, the adhesive started smoking and the amount of smoke was large so that interruption of sight could occur.

Example 5

Next, Example 5 will be described. As the flame retardant, an adhesive containing 20% by weight of ammonium polyphosphate and 10% by weight of aluminum hydroxide was used. A landing door was produced in the same manner as in Example 1 except therefor.

The landing door was subjected to the same fire resistance tests as those in Example 1. As a result, no inflammation of the adhesive layer 23 occurred up until 132 minutes.

Note that after 3 minutes from the start of the tests, the adhesive layer 23 started smoking, which ceased within 15 minutes from the start of the tests. Also, the amount of smoke was smaller than that in Comparative Example 1.

Embodiment 5

Next, Fig. 6 is a perspective view showing a landing door for an elevator according to Embodiment 5 of the present invention, as seen from the backside thereof. In this figure, the front panel 21 and the reinforcing member 22 are made of metal having a melting temperature of 900˚C or more. The upper abutting section 22c is fixed to the upper folded section 21f by first fixing means 31. The lower abutting section 22d is fixed to the lower folded section 21g by second fixing means 32.

Either one of the first and second fixing means 31 and 32 is constituted by a metallic material and the other is constituted by another metallic material having a melting point lower than that of the other metallic material. Here, the first fixing means 31 is constituted by a metallic material having a melting point equal to that of the front panel 21 and the reinforcing member 22 while the second fixing means 32 is constituted by a metallic material having a melting point of 200 to 600˚C.

Specifically, as the first fixing means 31, rivets made of metals having a melting point of 900˚C or more, for example, steel and stainless steel are used. On the other hand, as the second fixing means 32, rivets made of, for example, aluminum, solder, zinc, or the like are used.

The other constructions are the same as those in Embodiment 1.

Note that use of a metallic material having a melting point of 900˚C or more for the front panel 21, the reinforcing member 22 and the first fixing means 31 prevents them from being molten in case of a fire.

Further, plural reinforcing members 22 may be used.

In the case of such a landing door, since the material of the second fixing means 32 has a melting point of 200 to 600˚C, the second fixing means 32 melt in a relatively early stage in case of a fire and the lower abutting section 22d is separated from the lower folded section 21g.

For example, when the second fixing means 32 is constituted by rivets made of aluminum, the second fixing means 32 melt at about 500˚C after the adhesive layer 23 is peeled off. Until the second fixing means 32 melts, elongation in the vertical direction is restricted and hence the front panel 21 warps so that it projects toward the platform. However, when the second fixing means 32 melts, the restriction on the elongation in the vertical direction is removed so that the amount of warp of the front panel 21 is decreased.

Next, a case where the thermal expansion coefficient of the front panel 21 is greater than that of the reinforcing member 22, for example, where the material of the front panel 21 is a stainless steel plate and the material of the reinforcing member 22 is a soft steel plate, will be described.

Incaseof a fire, the temperature of the front panel 21 increases to be higher than that of the reinforcing member 22, thereby the warp of the front panel 21 toward the building side is increased to be more than that in the case where there is no difference in thermal expansion coefficient between the front panel 21 and the reinforcing member 22. As a result, the temperature at which the front panel 21 and the reinforcing member 22 separate from each other can be decreased. That is, after peeling of the reinforcing member 22, the warp of the front panel 21 becomes small, so that there can be no gap between the building and the landing door in a short time after a fire occurs.

Note that since the first fixing means 31 are constituted by a material having a high melting point, the adhesive layer 23 is peeled off in case of a fire so that even if the second fixing means 32 melts, the reinforcing member 22 can be prevented from falling off.

In the case where a thermosetting resin is used as the organic adhesive, it is desirable that one having a glass transition temperature (tan δ peak of viscoelasticity measurement) of 50 to 120˚C, since the landing door of an elevator is required to have a high rigidity in an ordinary use environment (-20 to +50˚C). Note that use of a thermosetting resin can give rise to an adhesive layer 23 excellent in adhesive strength and durability.

In the case where the above-mentioned glass transition temperature is less than 50˚C, the adhesive is soft and has a low adhesive strength in the ordinary use environment, so that the door cannotmaintain its rigidity. On the other hand, the glass transition temperature in excess of 120˚C makes the adhesive too hard and weak against impact in the ordinary use environment.

On the other hand, in the case where a thermoplastic resin is used as an organic adhesive, it is desirable that one having a softening temperature of 60 to 100˚C be used. Note that use of a thermoplastic resin can make the adhesion time shorter.

The adhesive having a softening temperature range as described above does not suffer from a decrease in adhesive strength even in the use environment and the adhesive layer 23 is peeled off so that the front panel 21 and the reinforcing member 22 can be separated in an early stage and hence is desirable.

Example 6

Next, Example 6 relating to the above-mentioned Embodiment 5 will be described. In Example 6, a landing door having a size of 785 mm in width × 2,525 mm in height was produced.

First, a steel plate of a thickness of 1.6 mm was worked to obtain the front panel 21. On the other hand, a steel plate of a thickness of 1.6 mm was worked to provide two reinforcing members 22 in the form of a hat in cross-section. That is, although only one reinforcing member 22 is shown in Fig. 6, in Example 6, two reinforcing members 22 were fixed to the backside of the front panel 21 in parallel to each other.

Each of the upper abutting sections 22c was fixed to the upper folded section 21f by means of two rivets as the first fixing means 31. As the rivets 24, steel-made rivets of a diameter of 4.8 mm were used.

For the adhesive layer 23, use was made of a two-pack room temperature curing acrylic adhesive (trade name: Hardlock C373, manufactured by Denki Kagaku Kogyo Kabushiki Kaisha) having a glass transition temperature of 105˚C (tan δ peak of viscoelasticity measurement).

Then, the landing door of Example 6 was begirded by fiber-mixed calcium silicate plates of a thickness of 24 mm and was attached to a fire resistance test heating furnace. The door was heated from the side of the front panel 21 according to the heat elevation formula prescribed by the prescription in BS746 in the same manner as in Example 1.

As a result of the fire resistance test, the reinforcing member 22 was peeled off after about 3 minutes from the start of the heating. At this moment, the temperature of the front panel 21 in a central part of the backside was 200˚C and the warp amount was 38 mm. Thereafter, the heating was continued up until 132 minutes during which the maximum warp amount was 34 mm.

Note that, the backside of the landing door is shown in Fig. 6 in a simplified manner, however the front panel 21 in actuality had a door hanger, which was made of a steel plate capable of attaching rollers, etc. thereto, and was attached to the upper part thereof. On the other hand, the lower part of the front panel 21 in actuality had welded thereto a lower structural member made of a steel plate capable of attaching thereto a rail guide or the like. Furthermore, the reinforcing member 22 was fastened with a hanger member by the first fixing means 31.

Comparative Example 2

Next, Comparative Example 2 will be described. In comparative Example 2, the reinforcing member 22, in place of the adhesive layer 23 in Example 6, was connected to the front panel 21 by spot welding. A landing door was produced in the same manner as in Example 6 except therefor.

The landing door was subjected to the same fire resistance tests under the same conditions as those in Example 6. As a result, the reinforcing member 22 did not separate from the front panel 21 up until completion of the fire resistance tests for 132 minutes, during which the maximum warp amount was 66 mm.

Example 7

Next, Example 7 relating to the above-mentioned Embodiment 5 will be described. In Example 7, two rivets made of steel were used as the first fixing means 31 and two rivets (of a diameter of 3.2 mm) made of aluminum were used as the second fixing means 32. A landing door was produced in the same manner as in Example 6 except therefor.

The landing door was subjected to fire resistance tests under the same conditions as those in Example 6. As a result, the reinforcing member 22 was peeled off after about 2 minutes from the start of the heating. At this moment, the temperature of the front panel 21 in a central part of the backside was 120˚C and the warp amount was 25 mm. Also, after 10 minutes from the start of the tests, the aluminum rivets, which were the second fixing means 32, were deformed and disengaged. At this moment, the warp amount was 30mm. Thereafter, the heating was continued up until 132 minutes, during which the maximum warp amount was 34 mm.

Example 8

Next, Example 8 relating to the above-mentioned Embodiment 5 will be described. In Example 8, as the material for the front panel 21, a stainless steel plate (SUS304) having a larger linear expansion coefficient than that of a steel plate was used. A landing door was produced in the same manner as in Example 6 except therefor.

The landing door was subjected to fire resistance tests under the same conditions as those in Example 6. As a result, the reinforcing member 22 was peeled off after about 2 minutes from the start of the heating. At this moment, the temperature of the front panel in a central part of the backside was 120˚C and the warp amount was 25 mm. Thereafter, the heating was continued up until 132 minutes, during which the maximum warp amount was 36 mm.

Example 9

Next, Example 9 relating to the above-mentioned Embodiment 5 will be described. In Example 9, as the adhesive that constituted the adhesive layer 23, a thermoplastic adhesive made of an ethylene/vinyl acetate copolymer (trade name: Evaflex, manufactured by Mitsui-Du Pont Polychemicals Co., Ltd.) (softening temperature: 90˚C) was used. A landing door was produced in the same manner as in Example 6 except therefor.

The landing door was subjected to fire resistance tests under the same conditions as those in Example 6. As a result, the reinforcing member 22 was peeled off after about 2 minutes from the start of the heating. At this moment, the temperature of the front panel 21 in a central part of the backside was 120˚C and the warp amount was 20 mm. Thereafter, the heating was continued up until 132 minutes, during which the maximum warp amount was 34 mm.

Example 10

Hereinafter, Example 10, which is a specific example of the organic adhesive containing a flame retardant will be described.

The organic adhesive contains a polymerizable vinyl monomer, a polymerization initiator, a reducing agent, and a flame retardant. It contains 25 to 75 parts by mass of the flame retardant per 100 parts by mass of the sum of the

polymerizable vinyl monomer, the polymerization initiator, and the reducing agent. As the flame retardant, a non-halogen flame retardant is preferred that does not generate noxious substances including dioxin when it is burned.

Preferably, the organic adhesive further contains an elastomer component.

The polymerizable vinyl monomer used in the present invention may be any one that is radical polymerizable. Among the polymerizable vinyl monomers, (meth)acrylate derivatives are preferable in consideration of curing rate and it is more preferable that all the polymerizable vinyl monomers be (meth)acrylate derivatives.

Here, the "polymerizable (meth)acrylate derivatives" refers to polymerizable acrylic acid derivatives and/or polymerizable methacrylic acid derivatives. They are used usually in the form of liquid or solid.

As the polymerizable vinyl monomers, those polymerizable vinyl monomers whose homopolymer has a glass transition temperature (hereinafter, sometimes referred to as "Tg") of 0˚C or less are used in consideration of distortion resistance.

The polymerizable vinyl monomer (1) whose homopolymer has a glass transition temperature of less than 0˚C, for example, a polymerizable (meth)acrylate derivative whose homopolymer has a glass transition temperature of less than 0˚C includes phenoxyethyl acrylate (Tg=-22˚C), phenoxydiethylene glycol acrylate (Tg=-25˚C), phenoxytetraethylene glycol acrylate (Tg = -18˚C), methoxyethyl acrylate (Tg = -50˚C), methoxybutyl acrylate (Tg = -56˚C), 2-ethylhexyl methacrylate (Tg = -10˚C), nonylphenyltetraethylene glycol acrylate (Tg = -20˚C), nonylphenyltripropylene glycol acrylate (Tg=-3˚C), 2-ethylhexyltricarbitol acrylate (Tg=-65˚C), isobutyl acrylate(Tg = -24˚C), isooctyl acrylate (Tg = -45˚C), n-lauryl acrylate (Tg = -3˚C), tetrahydrofurfuryl acrylate (Tg = -12˚C), 2-hydroxyethyl acrylate (-15˚C), and 2-hydroxypropyl acrylaye (Tg = -7˚C).

Among those, phenoxytetraethylene glycol acrylate and/or 2-ethylhexyl methacrylate are preferred from the viewpoint of good distortion resistance.

The use amount of the polymerizable vinyl monomer (1) whose homopolymer has a glass transition temperature of 0˚C or less is preferably 10 to 40 parts by mass, more preferably 20 to 30 parts by mass, per 100 parts by mass of the sum of the component (1) and the polymerizable vinyl monomer (5) whose homopolymer has a glass transition temperature of above 0˚C. If it is less than 10 parts by mass, there is the fear that the distortion resistance is low while if it is above 40 parts by mass, there is the fear that the adhesive strength is decreased.

As the polymerization initiator (2) used in the present invention, an organic peroxide is preferred. The organic peroxide includes cumene hydroperoxide, p-menthane hydroperoxide, tert-butyl hydroperoxide, diisopropylbenzene dihydroperoxide, methyl ethyl ketone peroxide, benzoyl peroxide, and tert-butyl peroxybenzoate. Among those, cumene hydroperoxide is preferred from the viewpoint of reactivity.

The use amount of the polymerization initiator (2) is preferably 0.1 to 20 parts by mass, more preferably 1 to 10 parts by mass, per 100 parts by mass of the polymerizable vinyl monomer. If it is less than 0.1 part by mass, there is the fear that the curing rate is low while if it is above 20 parts by mass, there is the fear that the storage stability becomes poor.

The reducing agent (3) used in the present invention may be any known reducing agent that reacts with the above-mentioned polymerization initiator to generate radicals. Representative examples of the reducing agent include tertiary amines, thiourea derivatives and transition metal salts.

The tertiary amine includes triethylamine, tripropylamine, tributylamine, and N,N-dimethyl-p-toluidine. The thiourea derivative includes 2-mercaptobenzimidazole, methylthiourea, dibutylthiourea, tetramethylthiourea, and ethylenethiourea. The transition metal salt includes cobalt naphthenate, copper naphthenate, and vanadylacetylacetonate. Among those, the thiourea derivative and/or the transition metal salt are preferred from the viewpoint of reactivity. Among the above-mentioned thiourea derivatives, ethylenethiourea is preferred from the viewpoint of reactivity. Among the above-mentioned transition metal salts, vanadylacetylacetonate is preferred from the viewpoint of reactivity.

The use amount of the reducing agent (3) is preferably 0.05 to 15 parts by mass, more preferably 0.5 to 5 parts by mass, per 100 parts by mass of the polymerizable vinyl monomer. If it is less than 0.05 part by mass, there is the fear that the curing rate is low while if it is above 15 parts by mass, there is a fear that the molecular weight of the cured component is decreased so that the adhesive strength is decreased.

The flame retardant (4) used in the present invention includes conventional retardants such as a halogeMBASed flame retardant, a phosphorus-based flame retardant, an organic acid metal salt-based flame retardant, and an inorganic flame retardant.

The halogeMBASed flame retardant includes: bromine-based flame retardants such as tetrabromobisphenol A, decabromodiphenyl oxide, hexabromocyclododecane, octabromodiphenyl oxide, bistribromophenoxyethane, tribromophenol, ethylenebistetrabromophthalimide, a tetrabromobisphenol A polycarbonate oligomer, a brominated polystyrene, a tetrabromobisphenol A epoxy oligomer/polymer, decabromodiphenylethane, polydibromophenyl oxide, hexabromobenzene, tetradecabromodiphenoxyoxybenzene, a bromionated epoxy oligomer, bis(tetrabromophthalimide) ethane, bis(tribromophenoxy)ethane, tetrabromophthalic anhydride, and tetrabromo-p-cresol; as well as chlorine-based flame retardants such as a chlorinated paraffin and perchlorocyclopentadecane.

The phosphorus-based flame retardant includes: phosphate-based flame retardants such as tricresyl phosphate, resorcinyl diphenyl phosphate, hydroquinonyl diphenyl phosphate, phenyl nonyl phenyl hydroquinonyl phosphate, triphenyl phosphate, phenyl dinonyl phenyl phosphate, tetraphenyl resorcinol diphosphate, tetracresyl bisphenol A diphosphate, and tris(nonylphenyl) phosphate; halogen-containing phosphate (or phosphonate)-based flame retardants such as diphenyl-4-hydroxy-2,3,5,6-tetrabromobenzyl phosphonate, dimethyl-4-hydroxy-3,5-dibromobenzyl phosphonate, and diphenyl-4-hydroxy-3,5-dibromobenzyl phosphonate; polyphosphoric acid; polyphosphates such as ammonium polyphosphate; as well as red phosphorous.

The organometallic salt-based flame retardant includes a metal salt of an organic sulfonic acid, a metal of a carboxylic acid, and a metal salt of an aromatic sulfonimide.

The inorganic flame retardant includes antimony trioxide, aluminum hydroxide, guanidine nitride, antimony pentoxide, magnesium hydroxide, zinc borate, zinc, zinc oxide and zirconium compounds. Among them is preferred aluminum hydroxide, which has an inclusion water of crystallization releasing temperature close to the thermal decomposition temperature of the adhesive.

These flame retardants may be used singly or two or more of them may be used in combination. Among them, phosphorus-based flame retardants are preferred in respect of adhesion, distortion resistance and flame retardancy. Among the phosphorus-based flame retardants, polyphosphates are preferable, with ammonium polyphosphate being more preferable, in respect of adhesion, low smoking property, distortion resistance and flame retardancy.

Ammonium polyphosphate is preferably particulate and those whose particle surface is chemically untreated or those microencapsulated by treating the particle surface thereof with a thermosetting resin are used.

The use amount of the flame retardant (4) is 25 to 75 parts by mass, preferably 30 to 60 parts by mass, per 100 parts by mass of a thermosetting resin composition containing the polymerizable vinyl monomer containing the component (1) and the optionally used component (5), the polymerization initiator (2), the reducing agent (3) and the optionally used elastomer component (6). If it is less than 25 parts by mass, no sufficient flame retardancy can be obtained while if it is above 75 parts by mass, the viscosity is significantly increased and the coating operation of the adhesive composition becomes hard to carry out with the distortion resistance also becoming insufficient.

Further, in the present invention, it is preferred to use a polymerizable vinyl monomer (5) whose homopolymer has a glass transition temperature of above 0˚C in order to increase the adhesion. Preferably, the polymerizable vinyl monomer (5) whose homopolymer has a glass transition temperature of above 0˚C includes polymerizable (meth)acrylate derivatives whose homopolymer has a glass transition temperature of above 0˚C.

The polymerizable vinyl monomer (5) whose homopolymer has a glass transition temperature of more than 0˚C, for example, a polymerizable (meth)acrylate derivative whose homopolymer has a glass transition temperature of more than 0˚C includes methyl methacrylate (Tg = 105˚C), 2-hydroxyethyl methacrylate (Tg = 55˚C), isobornyl methacrylate (Tg = 180˚C), isobornyl acrylate (Tg = 94˚C), methacrylic acid (Tg = 185˚C), ethyl methacrylate (Tg = 65˚C), isobutyl methacrylate (Tg = 48˚C), cyclohexyl methacrylate (Tg = 66˚C), benzyl methacrylate (Tg=54˚C), 2-hydroxypropylmethacrylate (Tg = 76˚C), glycidyl methacrylate (Tg = 46˚C), tert-butyl methacrylate (Tg = 107˚C), tetrahydrofurfuryl methacrylate (60˚C) tripropylene glycol diacrylate (90˚C), tetraethylene glycol diacrylate (Tg = 50˚C), pentaerythritol triacrylate (Tg = 250˚C or more), and trimethylolpropane triacrylate (Tg = 250˚C or more).

Among them, methyl methacrylate and/or 2-hydroxyethyl methacrylate is preferred in consideration of excellent curability and adhesion.

The use amount of the polymerizable vinyl monomer (5) whose homopolymer has a glass transition temperature of above 0˚C is preferably 60 to 90 parts by mass, more preferably 70 to 80 parts by mass, per 100 parts by mass of the sum of the component (1) and the component (5). If it is less than 60 parts by mass, there is the fear that the adhesion is low while if it is above 90 parts by mass, there is the fear that the distortion resistance is low.

Moreover, the polymerizable vinyl monomer other than the polymerizable (meth)acrylate derivative includes: styrene; .-alkylstyrene; divinylbenzene; vinyl ether; divinyl ether; N-vinyl pyrrolidone; 2-vinylpyridine; and vinyl esters such as vinyl acetate and vinyl propionate.

Furthermore, in the present invention, in order to improve an impact resistance, (6) an elastomer component is used. The elastomer component refers to a polymeric product having an elastomeric property at room temperature. Those which can be dissolved or dispersed in the polymerizable vinyl monomer are preferred.

Such an elastomer component includes: various synthetic rubbers such as an acrylonitrile/butadiene/methacrylic acid copolymer, an acrylonitrile/butadiene/methyl methacrylate copolymer, a butadiene/styrene/methyl methacrylate copolymer (MBS), an acrylonitrile/styrene/butadiene copolymer, a methyl methacrylate/butadiene/acrylonitrile/styrene copolymer (MBAS), as well as an acrylonitrile/butadiene rubber, a linear polyurethane, a styrene/butadiene rubber, a chloroprene rubber and a butadiene rubber; natural rubbers; styrene thermoplastic elastomers such as a styrene/polybutadiene/styrene synthetic rubber; olefin thermoplastic elastomers such as a polyethlyene/EPDM synthetic rubber; as well as urethane thermoplastic elastomers such as caprolactone type-, adipate type-, and PTMG type-urethane thermoplastic elastomers; polyester thermoplastic elastomers such as a polybutylene terephthalate/polytetramethylene glycol multiblock polymer; polyamide thermoplastic elastomers such as a nylon/polyol block copolymer and a nylon/polyester block copolymer; 1,2-polybutadiene thermoplastic elastomers; as well as PVC thermoplastic elastomers. Those

elastomer components may be used alone, or in combination of two or more of the above-mentioned components, so long as they are compatible with each other.

Among those, the methyl methacrylate/butadiene/acrylonitrile/styrene copolymer and/or the acrylonitrile/butadiene rubber are preferred from the viewpoint of solubility to a compound and adhesion. More preferably, the methyl methacrylate/butadiene/acrylonitrile/styrene copolymer and the acrylonitrile/butadiene rubber are used in combination.

(6) The use amount of the elastomer component is preferably 5 to 50 parts by mass, more preferably 10 to 30 parts by mass, per 100 parts by mass of the polymerizable vinyl monomer. If it is less than 5 parts by mass, there is the fear that the viscosity and toughness are decreased while if it is above 50 parts by mass, the viscosity becomes too high, so that inconvenience occurs during working.

Further, in the present invention, acidic phosphoric acid compounds represented by the following general formula (I) may be used in order to increase adherence.

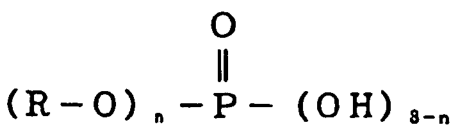

(I)

(wherein R represents a $CH_2=CR_1CO(OR_2)_m$- group (provided that $R_1$ is a hydrogen or a methyl group, $R_2$ is $-C_2H_4-$, $-C_3H_6-$, $-CH_2CH(CH_3)-$ $C_4H_8-$, $-C_6H_{12}-$, or

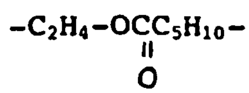

m is an integer of 1 to 10), and n is an integer of 1 or 2).

The acidic phosphorus acid compound represented by this general formula (I) includes acid phosphoxyethyl (meth)acrylate, acid phosphoxypropyl (meth)acrylate, and bis(2-(meth)acryloyloxyethyl)phosphate.

Among those, (2-hydroxyethyl)methacrylic acid phosphate is preferred from the viewpoint of good adherence.

The use amount of the acidic phosphoric acid compound represented by this general formula (I) is preferably 0.05 to 10 parts by mass, more preferably 1 to 7 parts by mass, per 100 parts by mass of the polymerizable vinyl monomer. If it is less than 0.05 part by mass, there is the fear that the adherence is not obtained while if it is above 10 parts by mass, the adherence becomes poor.

Further, in the present invention, various paraffins may be used in order to accelerate curing of the part that contacts the air. Paraffins include paraffin, microcrystalline wax, carnauba wax, beeswax, lanolin, spermaceti wax, ceresin, and candelilla wax. Among them, paraffin is preferred. The melting point of the paraffins is preferably 40 to 100°C.

The use amount of the paraffins is preferably 0.1 to 5 parts by mass per 100 parts by mass of the polymerizable vinyl monomer. If it is less than 0.1 part by mass, there is the fear that curing of the part that contacts the air becomes poor while if it is above 5 parts by mass, there is the fear that the adhesive strength is decreased.

Furthermore, various antioxidants including a polymerization inhibitor, etc. can be used in the present invention to improve storage stability. The antioxidant includes hydroquinone, hydroquinone monomethyl ether, 2,6-di-tert-butyl-p-cresol, 2,2'-methylene bis(4-methyl-6-tert-butylphenol), triphenyl phosphite, phenothiazine, and N-isopropyl-N'-phenyl-p-phenylenediamine. Among those, p-methoxyphenol is preferred.

The use amount of the antioxidant is preferably 0.001 to 3 parts by mass per 100 parts by mass of the polymerizable vinyl monomer. If it is less than 0.001 part by mass, there is the fear that no effect is obtained while if it is above 3 parts by mass, there is the fear that the curing strength is decreased.

In the present invention, finely powdered silica or the like may also be used for adjusting the viscosity or for adjusting the flow resistance or flowability. In addition thereto, already known substances such as plasticizers, fillers, colorants or corrosion inhibitors may be used as desired.

The flame retardant curing resin composition of the present invention has a storage elastic modulus at 23°C as a cured body of preferably 1,500 MPa or less, more preferably 1,000 MPa or less. If it is above 1,500 MPa, there is the fear that the distortion resistance is decreased.

The embodiments of the present invention include, for example, use of the composition as a two-pack type

flame retardant curing resin composition. As for the two-pack type, not all the essential components of the flame retardant curing resin composition of the present invention are mixed during storage but the flame retardant curing resin composition is divided into a first agent and a second agent, and the polymerization initiator (2) and the reducing agent (3) are stored separately in the first agent and in the second agent, respectively. The two-pack type is preferred since it is excellent in storage stability. In this case, both agents can be used as a two-pack type flame retardant curing resin composition by coating them simultaneously or separately to contact them to each other and let them cure.

The method of adding the flame retardant (4) is not particularly limited and (i) a method in which the flame retardant is added to each of the first agent and the second agent in different formulation, (ii) a method in which the flame retardant is added to only one of the agents, and (iii) a method in which the flame retardant is added to both in the same proportion and in the same amount evenly, etc. may be exemplified. Among them, the method (iii) is preferred in consideration that the first and second agents have the same viscosity and the operation is easy.

The flame retardant curing adhesive used in the present invention exhibits excellent adhesion when the adherend is a metal. As the metal, iron, stainless steel, brass, zinc and the like may be mentioned.

The thickness of the metal plate is preferably 0.1 to 3.2 mm. If it is less than 0.1 mm, there is the fear that it is difficult to ply the metal plates in a state where there is no adhesion distortion while if its above 3.2 mm, there is the fear that the metal plate becomes too heavy, so that weight reduction of metal plates such as panels for an elevator becomes impossible.

Hereinafter, Example 10 will be further described by Test Examples. The ammonium polyphosphate used was one whose particle surface was coated with a melamine resin and that was finely divided. The paraffin used had a melting point of 56˚C. As the acidic phosphoric acid compound, (2-hydroxyethyl)methacrylic acid phosphate was used.

Note that hereinafter, the unit of the use amount of each of the substances is expressed in terms of part by mass. As for the substances, the following abbreviations were used.

NBR: Acrylonitrile/butadiene rubber
MBAS: methyl methacrylate/butadiene/acrylonitrile/styrene copolymer
TCP: Tricresyl phosphate

Further, various physical properties were measured as follows.

[Storage elastic modulus]

An adhesive composition was cured into a 1-mm-thick sheet and the obtained cured body was measured for storage elastic modulus at 23˚C on a viscoelasticity measuring device (Tension Module DMS210 manufactured by Seiko Instruments, Inc.).

[Distortion Amount/Distortion]

In a central part of a SPCC test piece having a size of 200 mm in length × 25 mm in width × 0.3 mm in thickness, an adhesive composition was coated to a size of 100 mm in length × 25 mm in width × 2 mm in thickness, cured and aged at room temperature for 24 hours and thereafter the warp amount of the SPCC test piece was measured. Also, after the aging, presence or absence of distortion was visually judged at a position 5 m distant from the test piece. The judgement was as follows. .: No warp was noticeable.. A slight warp was seen. ×: A warp was obvious.

[Tensile shearing adhesive strength]

According to JIS K-6856, a mixture of equivalent amounts of the first agent and second agents was coated on one of two test pieces (100 mm × 25 mm × 1.6 mm t, SECC-D sandblast-treated). Thereafter, immediately after another test piece was superposed and plied on the coated test piece, the resultant was aged at room temperature for 24 hours to make a sample.

The tensile shearing adhesive strength (unit: MPa) of the sample was measured in an environment of a temperature of 23˚c and a relative humidity of 50% at a drawing speed of 10 mm/minute.

[Flame retardancy]

According to the UL-94 vertical flame test method, a cured body of a thickness of 1/8 inch (0.3175 cm) was prepared and evaluated for its inflammability.

[Smoking property]

In a central part of a SPCC test piece having a size of 150 mm × 150 mm × 1.6 mm, an adhesive composition was coated to a size of 30 mm × 30 mm × 2 mm, cured and roasted by flame from below the SPCC plate and at that time the smoking property was visually evaluated. . indicates the case where no smoking occurred, . indicates the case where a slight smoking occurred, and × indicates the case where considerable smoking occurred.

Test Example 1

Composition A (for the first agent) and Composition B (for the second agent) as shown in Table 1 were prepared. However, the monomers used had the compositions shown in Table 2. Compositions A and B were used for preparing a two-pack type flame retardant curing adhesive composition consisting of the first agent and the second agent and this was evaluated for the physical properties. The results obtained are shown in Table 3.

(Table 1)

| Composition of Composition A (for the first agent) | Amounts used |
|---|---|
| NBR | 9.5 |
| MBAS | 6.5 |
| Monomer | 78.0 |
| Cumene hydroperoxide | 5.0 |
| Paraffin | 0.5 |
| P-methoxyphenol | 0.5 |
| Composition of Composition B (for the second agent) | Amounts used |
| NBR | 9.5 |
| MBAS | 6.5 |
| Monomer | 78.0 |
| Ethylenethiourea | 2.2 |
| Paraffin | 0.5 |
| Acidic phosphorus acid compound | 3.3 |
| The unit of amount used is parts by mass. | |

(Table 2)

| Composition of Monomer (for the first agent) | | A-11 | A-12 |
|---|---|---|---|
| Methyl methacrylate | (Tg =105°C) | 50 | 50 |
| 2-Hydroxyethyl methacrylate | (Tg = 55°C) | 25 | 25 |
| Phenoxytetraethylene glycol acrylate | (Tg =-18°C) | - | 25 |
| 2-Ethylhexyl methacrylate | (Tg =-10°C) | 25 | - |
| Composition of Monomer (for the second agent) | | B-11 | B-12 |
| Methyl methacrylate | (Tg =105°C) | 50 | 50 |
| 2-Hydroxyethyl methacrylate | (Tg = 55°C) | 25 | 25 |
| Phenoxytetraethylene glycol acrylate | (Tg =-18°C) | - | 25 |
| 2-Ethylhexyl methacrylate | (Tg =-10°C) | 25 | - |
| The unit of amount used is part by mass.<br>Numbers in the parentheses represent the glass transition temperatures of respective homopolymers. | | | |

(Table 3)

| Experiment No. | | | 1-1 | 1-2 | 1-3 |
|---|---|---|---|---|---|
| Amount used | The first agent | Composition A (Monomer: A-11)<br>Composition A (Monomer: A-12)<br>Ammonium polyphosphate<br>TCP | 100<br>-<br>45<br>- | -<br>100<br>45<br>- | 100<br>-<br>-<br>45 |
| | The second agent | Composition B (Monomer: B-11)<br>Composition B (Monomer: B-12)<br>Ammonium polyphosphate<br>TCP | 100<br>-<br>45<br>- | -<br>100<br>45<br>- | 100<br>-<br>-<br>45 |
| Storage elastic modulus (Mpa) | | | 550 | 660 | 250 |
| Degree of distortion (mm) | | | 0.5 | 1.0 | 0.5< |
| Distortion | | | 0 | 0 | 0 |
| Tensile shearing adhesive strength (MPa) | | | 15 | 7 | 3 |
| Flame retardancy | | | V-0 | V-0 | V-2 |
| Smoking property | | | 0 | 0 | x |
| The unit of amount used is part by mass. | | | | | |

Test Example 2

The same procedures as in Test Example 1 were followed except that a two-pack type flame retardant curing adhesive composition consisting of the first agent and the second agent as shown in Table 4 was prepared and evaluated for the physical properties. The results obtained are shown in Table 4.

(Table 4)

| Experiment No. | | | 2-1 | 2-2 | 2-3 | 1-1 | 2-4 | 2-5 |
|---|---|---|---|---|---|---|---|---|
| Amount used | The first agent | Composition A (Monomer: A-11)<br>Ammonium polyphosphate | 100<br>- | 100<br>25 | 100<br>30 | 100<br>45 | 100<br>60 | 100<br>75 |
| | The second agent | Composition B (Monomer: B-11)<br>Ammonium polyphosphate | 100<br>- | 100<br>25 | 100<br>30 | 100<br>45 | 100<br>60 | 100<br>75 |
| Storage elastic modulus (Mpa) | | | 330 | 460 | 480 | 550 | 640 | 780 |
| Degree of distortion (mm) | | | <0.5 | <0.5 | <0.5 | 0.5 | 2.5 | 5.5 |
| Distortion | | | 0 | 0 | 0 | 0 | 0 | 0 |
| Tensile shearing adhesive strength (MPa) | | | 13 | 13 | 14 | 15 | 16 | 18 |
| Flame retardancy | | | Out | V-2 | V-0 | V-0 | V-0 | V-0 |
| Smoking property | | | 0 | 0 | 0 | 0 | 0 | 0 |
| Notes | | | Comparative example | Example | Example | Example | Example | Example |
| The unit of amount used is part by mass. | | | | | | | | |

Test Example 3

The same procedures as in Test Example 1 were followed except that a two-pack type flame retardant curing adhesive composition consisting of the first agent and the second agent as shown in Table 6 was prepared by using the monomer having the composition shown in Table 5 as well as Composition A and Composition B and evaluated for the physical properties. The results obtained are shown in Table 6.

(Table 5)

| Composition of Monomer (for the first agent) | | A-31 | A-32 | A-33 | A-11 | A-34 | A-35 |
|---|---|---|---|---|---|---|---|
| Methyl methacrylate | (Tg =105˚C) | 67 | 60 | 27 | 50 | 47 | 40 |
| 2-Hydroxyethyl methacrylate | (Tg = 55˚C) | 33 | 30 | 53 | 25 | 23 | 20 |
| 2-Ethylhexyl methacrylate | (Tg =-10˚C) | - | 10 | 20 | 25 | 30 | 40 |
| Composition of Monomer (for the second agent) | | B-31 | B-32 | B-33 | B-11 | B-34 | B-35 |
| Methyl methacrylate | (Tg =105˚C) | 67 | 60 | 27 | 50 | 47 | 40 |
| 2-Hydroxyethyl methacrylate | (Tg = 55˚C) | 33 | 30 | 53 | 25 | 23 | 20 |
| 2-Ethylhexyl methacrylate | (Tg =-100˚C) | - | 10 | 20 | 25 | 30 | 40 |
| The unit of amount used is part by mass.<br>Numbers in the parentheses represent the glass transition temperatures of respective homopolymers. | | | | | | | |

(Table 6)

| Experiment No. | | | 3-1 | 3-2 | 3-3 | 1-4 | 3-4 | 3-5 |
|---|---|---|---|---|---|---|---|---|
| Amount used | The first agent | Composition A (Monomer: A-31) | 100 | - | - | - | - | - |
| | | Composition A (Monomer: A-32) | - | 100 | - | - | - | - |
| | | Composition A (Monomer: A-33) | - | - | 100 | - | - | - |
| | | Composition A (Monomer: A-11) | - | - | - | 100 | - | - |
| | | Composition A (Monomer: A-34) | - | - | - | - | 100 | - |
| | | Composition A (Monomer: A-35) | - | - | - | - | - | 100 |
| | | Ammonium polyphosphate | 45 | 45 | 45 | 45 | 45 | 45 |
| | The second agent | Composition B (Monomer: B-31) | 100 | - | - | - | - | - |
| | | Composition B (Monomer: B-32) | - | 100 | - | - | - | - |
| | | Composition B (Monomer: B-33) | - | - | 100 | - | - | - |
| | | Composition B (Monomer: B-11) | - | - | - | 100 | - | - |
| | | Composition B (Monomer: B-34) | - | - | - | - | 100 | - |
| | | Composition B (Monomer: B-35) | - | - | - | - | - | 100 |
| | | Ammonium polyphosphate | 45 | 45 | 45 | 45 | 45 | 45 |
| Storage elastic modulus (Mpa) | | | 2500 | 1500 | 1000 | 550 | 240 | 180 |
| Degree of distortion (mm) | | | 14.0 | 6.0 | 2.5 | 0.5 | <0.5 | <0.5 |
| Distortion | | | X | . | 0 | 0 | 0 | 0 |
| Tensile shearing adhesive strength (MPa) | | | 28 | 20 | 18 | 15 | 12 | 8 |
| Flame retardancy | | | V-0 | V-0 | V-0 | V-0 | V-0 | V-0 |
| Smoking property | | | 0 | 0 | 0 | 0 | 0 | 0 |
| Notes | | | Comparative example | Example | Example | Example | Example | Example |
| The unit of amount used is part by mass. | | | | | | | | |

Example 11

Hereinafter, Example 11 which is a specific example of the organic adhesive containing a flame retardant will be described.

The organic adhesive of Example 11 contains a resin composition containing a polymerizable vinyl monomer (1), a polymerization initiator (2), a reducing agent (3) and an optionally used elastomer component (6) and a phosphoric acid ester (4) and a metal hydroxide (5). Note that the resin composition may contain paraffins and antioxidants.

The polymerizable vinyl monomer (1) used in Example 11 may be any one that is radical polymerizable. Among the polymerizable vinyl monomers, polymerizable (meth)acrylate derivatives are preferred in consideration of curing rate, etc. and it is preferable that the polymerizable (meth)acrylate derivatives are present in 70 parts by mass or more per 100 parts by mass of the polymerizable vinyl monomers. Most preferably, all the polymerizable vinyl monomers are (meth)acrylate derivatives. Here, the "polymerizable (meth)acrylate derivatives" refers to polymerizable acrylic acid derivatives and/or polymerizable methacrylic acid derivatives. They are used usually in the form of liquid or solid. Examples of the polymerizable (meth) acrylate derivatives include the following.

[1] A monomer represented by the general formula:

$$Z\text{-}O\text{-}R_1$$

wherein Z represents a (meta)acryloyl group, a $CH_2{=}CHCOOCH_2\text{-}CH(OH)CH_2$ group, or a $CH_2{=}C(CH_3)COOCH_2\text{-}CH(OH)CH_{2\backslash}$ group, and $R_1$ represents hydrogen, an alkyl group containing from 1 to 20 carbon atoms, a cycloalkyl group, a benzyl group, a phenyl group, a tetrahydrofurfuryl group, a glycidyl group, a dicyclopentyl group, a dicyclopentenyl group, or a (meth)acryloyl group.

Examples of such a monomer include, for example, (meth)acrylic acid, methyl (meth)acrylate, cyclohexyl (meth) acrylate, benzyl (meth)acrylate, tetrahydrofurfuryl (meth)acrylate, dicyclopentyl (meth)acrylate, dicyclopentenyl (meth)acrylate, glycerol (meth)acrylate, and glycerol di(meth)acrylate.

[2] A monomer represented by the general formula:

$$Z\text{-}O\text{-}(R_2O)_p\text{-}R_1$$

wherein Z and $R_1$ are as defined above; and $R_2$ represents $-C_2H_4-$, $-C_3H_6-$, $-CH_2CH(CH_3)-$, $-C_4H_8-$, or $-C_6H_{12}-$, and P is a integer of from 1 to 25.

Examples of such a monomer include, for example, 2-hydroxyethyl (meth)acrylate, 2-hydroxypropyl (meth)acrylate, ethoxyethyl (meth)acrylate, polyethylene glycol (meth)acrylate, phenoxyethyl (meth)acrylate, dicyclopentenyloxyethyl (meth)acrylate, phenoxydiethylene glycol (meth)acrylate, tripropylene glycol di(meth)acrylate, and 1,6-hexanediol di(meth)acrylate.

[3] A monomer represented by the general formula:

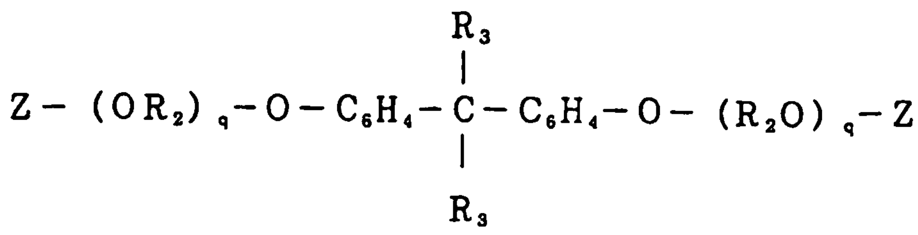

wherein Z and $R_2$ are as defined above; and $R_3$ represents hydrogen, or an alkyl group containing from 1 to 4 carbon atoms, and q is an integer of from 0 to 8.

Examples of such a monomer include 2,2-bis(4-(meth)acryloxyphenyl)propane, 2,2-bis(4-(meth)acryloxyethoxyphenyl)propane, 2,2-bis(4-(meth)acryloxydiethoxyphenyl)propane, 2,2-bis(4-(meth)acryloxypropoxyphenyl)propane, and 2,2-bis(4-(meth)acryloxytetraethoxyphenyl)propane.

[4] A (meth)acrylate of a polyhydric alcohol, other than the monomers according to the above-mentioned [1], [2] and [3].

Examples of such a monomer include, for example, trimethylolpropane tri(meth)acrylate, neopentyl glycol di(meth) acrylate, pentaerythritol tetra(meth)acrylate, and dipentaerythritol hexa(meth)acrylate.

[5] A urethane prepolymer having a (meth)acryloyloxy group.
Such a monomer can be obtained, for example, by reacting a (meth)acrylate having a hydroxy group, an organic polyisocyanate and a polyhydric alcohol.
The (meth) acrylate having a hydroxy group used herein includes, for example, hydroxyethyl (meth)acrylate, hydroxypropyl (meth)acrylate, and hydroxybutyl (meth)acrylate.
Also, the organic polyisocyanate includes, for example, toluene diisocyanate, 4,4-diphenylmethane diisocyanate, hexamethylene diisocyanate, and isophorone diisocyanate.
The polyhydric alcohol includes, for example, polyethylene glycol, polypropylene glycol, polytetramethylene glycol, and polyester polyol.
[6] The acidic phosphoric acid compound represented by the general formula (I) as described in the above-mentioned Example 10.

As described above, the monomers [1], [2], [3], [4], [5] and [6] may be used singly or two or more of them may be used.
Also, examples of the polymerizable vinyl monomers other than the polymerizable (meth) acrylate derivatives are as shown in Example 10.
The material and use amount of the polymerizable initiator (2) used in Example 11 are the same as those in Example 10. 7 The material and use amount of the reducing agent (3) used in Example 11 are the same as those in Example 10.
The phosphoric acid ester (4) used in Example 11 is preferably phosphoric acid esters represented by the general formula (A) and/or (B)in regards to flame retardancy.

General formula (A)

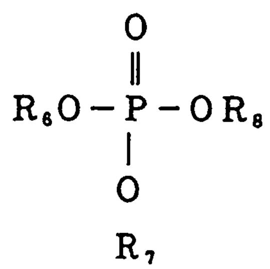

General formula (B)

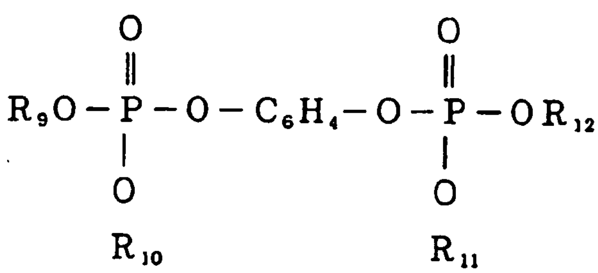

(wherein $R_6$, $R_7$, $R_8$, $R_9$, $R_{10}$, $R_{11}$, and $R_{12}$ represent $CH_3$-, $C_2H_5$-, $C_6H_5$-, $CH_3$-$C_6H_4$- or $(CH_3)_2$-$C_6H_3$- and $R_6$, $R_7$, $R_8$, $R_9$, $R_{10}$, $R_{11}$, and $R_{12}$ may be the same or different.)
The examples of the phosphoric acid ester represented by the general formula (A) and/or the general formula (B) include triethyl phosphate, triphenyl phosphate, tricresyl phosphate, trixylenyl phosphate, cresyl diphenyl phosphate, cresyl-2,6-xylenyl phosphate, triresocinol diphosphate, tert-butyl phosphate, phenyl phosphate, and aromatic condensation phosphates.
Among those, one or more of phosphoric acid esters selected from the group consisting of triethyl phosphate, triphenyl phosphate, tricresyl phosphate and trixylenyl phosphate are preferred from the viewpoint of a high phosphorus content per unit weight and a high flame retardancy. More preferred are triethyl phosphate and/or triphenyl phosphate.

Most preferred is triphenyl phosphate in that it has a high boiling point, and it hardly pollutes a coating oven upon baking finish in the coating oven of the adherent joined using the present flame retardant resin composition.

The use amount of phosphoric acid ester is preferably 5 to 40 parts by mass, more preferably 10 to 30 parts by mass, per 100 parts by mass of the resin composition containing a polymerizable vinyl monomer (1), a polymerization initiator (2), a reducing agent (3) and an optionally used elastomer component (6). If it is less than 5 parts by mass, there is the fear that no sufficient flame retardancy is obtained and the proportion of the metal hydroxide added in order to obtain sufficient flame retardancy increases, resulting in a considerable increase in viscosity, which may make the operation of coating the adhesive composition difficult. On the other hand, if it is above 40 parts by mass, there is the fear that the adhesion is extremely decreased.

The metal hydroxide (5) used in Example 11 is preferably one that causes release of water of crystallization in the range of 200 to 400˚C in which thermal decomposition or depolymerization of each component in the resin composition can occur. As those which satisfy this condition, aluminum hydroxide and/or magnesium hydroxide is preferred. Among them, aluminum hydroxide is preferred in consideration of curability and flame retardancy.

The use amount of the metal hydroxide is preferably 10 to 75 parts by mass, more preferably 30 to 50 parts by mass, per 100 parts by mass of the resin composition containing a polymerizable vinyl monomer (1), a polymerization initiator (2), a reducing agent (3) and an optionally used elastomer component (6). If it is less than 10 parts by mass, no sufficient flame retardancy is obtained so that there is the fear that adhesion strength is decreased while if it is above 75 parts by mass, there is the fear that a considerable increase in viscosity is accompanied, so that the operation of coating the adhesive composition becomes difficult.

The method of adding the phosphoric acid ester and the metal hydroxide is not particularly limited and includes (i) a method in which different substances are added to each of the first agent and the second agent, (ii) a method in which they are added to only one of the agents, and (iii) a method in which they are added to both in the same proportion and in the same amount evenly. Among them, the method (iii) is preferred in consideration that the first and second agents have the same viscosity.

Further, in Example 11, it is preferred that the elastomer component (6) be used for the purpose of increasing the toughness of the resin composition. The material and use amount of the elastomer component are the same as those in Example 10.

One kind of or two or more kinds of the elastomer component may be used as far as good compatibility is retained. Also, terminal methacryl-modified polybutadiene may also be used.

Further, in Example 11, various paraffins may be used in order to accelerate curing of the part that contacts the air. The material and use amount of the paraffins are the same as those in Example 10.

Furthermore, for the purpose of improving the storage stability, various antioxidants including polymerization inhibitors and the like may be used. The material and use amount of the antioxidants are the same as those in Example 10.

To adjust the viscosity and adjust the flow resistance or flowability, fillers such as finely powdered silica may be used. In addition thereto, already known substances such as plasticizers, colorants, corrosion inhibitors and the like may also be used as needed.

Also, the organic adhesive in Example 11 is preferably used as a two-pack type adhesive in the same manner as in Example 10.

Hereinafter, Example 11 will be further described in detail by Test Examples. The unit of use amount of each of the substances is expressed in part by mass. For the substances the following abbreviations were used. The paraffin used had a melting point of about 56˚C.

[Abbreviations]

NBR: acrylonitrile/butadiene rubber
MBAS: methyl methacrylate/butadiene/acrylonitrile/styrene copolymer
Acidic phosphorus acid compound: acid phosphoxyethyl methacrylate
TPP: triphenyl phosphate
TEP: triethyl phosphate

Moreover, various physical properties were determined as follows.

[Viscosity]

According to JIS K-7117, 500 ml each of the first and second agents was taken and left in an incubator at 25˚C for 24 hours to obtain a sample. Measurement of viscosity was performed by continuously measuring for 2 minutes by

using a single cylinder type viscometer at 25°C (rotation number of the rotor: 20 rpm).

[Tensile shearing adhesive strength]

The same as in Example 10.

[Flame retardancy]

The same as in Example 10.

Test Example 4

A resin composition having the composition shown in Table 7 was prepared. By using the resin composition, a two-pack type flame retardant adhesive composition having the composition shown in Table 8 was prepared and evaluated for the physical property. The results obtained are shown in Table 8.

(Table 7)

| Number of Resin composition | A-1 |
|---|---|
| NBR | 10.0 |
| MBAS | 6.7 |
| Methyl methacrylate | 46.7 |
| 2-Hydroxymethyl methacrylate | 15.6 |
| Isobornyl methacrylate | 15.6 |
| Cumene hydroperoxide | 4.6 |
| Paraffin | 0.4 |
| P-methoxyphenol | 0.4 |
| Number of Resin composition | A-2 |
| NBR | 10.0 |
| MBAS | 7.0 |
| Methyl methacrylate | 48.3 |
| 2-Hydroxyethyl methacrylate | 16.2 |
| Isobornyl methacrylate | 16.2 |
| Vanadylacetylacetonate | 0.6 |
| Paraffin | 0.4 |
| Acidic phosphorus acid compound | 0.9 |
| The unit of amount used is part by mass. | |

(Table 8)

| Experiment No. | | | 2-1 | 2-2 | 1-1 | 2-3 | 2-3 |
|---|---|---|---|---|---|---|---|
| Amount used | The first agent | Resin composition A-1 | 100 | 100 | 100 | 100 | 100 |
| | | TPP | 0 | 10 | 20 | 30 | 0 |
| | | TEP | 0 | 0 | 0 | 0 | 20 |
| | | Aluminum hydroxide | 40 | 40 | 40 | 40 | 40 |
| | The second agent | Resin composition A-2 | 100 | 100 | 100 | 100 | 100 |
| | | TPP | 0 | 10 | 20 | 30 | 0 |
| | | TEP | 0 | 0 | 0 | 0 | 20 |
| | | Aluminum hydroxide | 40 | 40 | 40 | 40 | 40 |
| Evaluation result | Viscosity of the first agent (mPa·s) | | 110,000 | 39,000 | 23,000 | 16,000 | 37,000 |
| | Viscosity of the second agent (mPa·s) | | 98,000 | 35,000 | 21,000 | 15,000 | 32,000 |
| | Tensile shearing adhesive strength (MPa) | | 22.7 | 15.2 | 13.4 | 11.7 | 18.6 |
| | Flame retardancy | | Out | V-1 | V-1 | V-1 | V-1 |
| Notes | | | Comparative example | Example | Example | Example | Example |
| The unit of amount used is part by mass. | | | | | | | |

Test Example 5

Tests were performed in the same manner as in Test Example 4 except that a two-pack type flame retardant adhesive composition having the composition shown in Table 9 was prepared. The results obtained are shown in Table 9.

(Table 9)

| Experiment No. | | | 2-1 | 2-2 | 1-1 | 2-3 |
|---|---|---|---|---|---|---|
| Amount used | The first agent | Resin composition A-1 | 100 | 100 | 100 | 100 |
| | | TPP | 20 | 20 | 20 | 20 |
| | | aluminum hydroxide | 0 | 30 | 40 | 50 |
| | The second agent | Resin composition A-2 | 100 | 100 | 100 | 100 |
| | | TPP | 40 | 40 | 40 | 40 |
| | | aluminum hydroxide | 0 | 30 | 40 | 50 |
| Evaluation result | Viscosity of the first agent (mPa·s) | | 4,500 | 16,000 | 23,000 | 39,000 |
| | viscosity of the second agent (mPa·s) | | 4,300 | 15,000 | 21,000 | 36,000 |
| | Tensile shearing adhesive strength (MPa) | | 8.0 | 11.2 | 13.4 | 15.1 |
| | Flame retardancy | | Out | V-1 | V-1 | V-1 |

(continued)

| Experiment No. | 2-1 | 2-2 | 1-1 | 2-3 |
|---|---|---|---|---|
| Notes | Comparative example | Example | Example | Example |
| The unit of amount used is part by mass. | | | | |

Example 12

Hereinafter, Example 12 which is a specific example of the organic adhesive containing a flame retardant will be described.
The organic adhesive of Example 12 contains a resin composition containing a polymerizable vinyl monomer (1), a polymerization initiator (2), a reducing agent (3) and an optionally used elastomer component (5) and a phosphoric acid salt (4). Note that the resin composition may contain paraffins and antioxidants.
The polymerizable vinyl monomer (1) used in Example 12 is the same as that in Example 11.
The material and use amount of the polymerizable initiator (2) used in Example 12 are the same as those in Example 10.
The material and use amount of the reducing agent (3) used in Example 12 are also the same as those in Example 10.
The phosphoric acid salt (4) used in the Example 12 includes: metal salts of phosphoric acid such as sodium phosphate, potassium phosphate,' magnesium phosphate, zinc phosphate and aluminum phosphate; hydrates of those metal salts of phosphoric acid; polyphosphates such as ammonium polyphosphate, sodium polyphosphate and potassium phosphate; amine salts of phosphoric acid such as ammonium phosphate, phosphoric acid salt of ethylenediamine and phosphoric acid salt of diethylenetriamine; as well as phosphoric acid salt of guanidine. Among those, the polyphosphates are preferred from the viewpoint of flame retardancy, curability, adhesion, and ease of handling. More preferred is ammonium polyphosphate.
The ammonium polyphosphate is preferably finely powdered ammonium polyphosphate and those whose particle surface is chemically untreated or those microencapsulated by treating the particle surface thereof with a thermosetting resin are used.
The use amount of the phosphoric acid salt is preferably 10 to 75 parts by mass, more preferably 30 to 60 parts by mass, per 100 parts by mass of the resin composition containing a polymerizable vinyl monomer (1), a polymerization initiator (2), a reducing agent (3) and an optionally used elastomer component (5). If it is less than 10 parts by mass, there is the fear that no sufficient flame retardancy is obtained while if it is above 75 parts by mass, there is the fear that adhesive strength under peel and adhesive strength under impact are decreased accompanied by a considerable increase in viscosity, so that the operation of coating the adhesive composition becomes difficult.
The method of adding the phosphoric acid salt is not particularly limited and includes (i) a method in which the phosphoric acid salt is added to each of the first agent and the second agent, (ii) a method in which the phosphoric acid salt is added to only one of the agents, and (iii) a method in which the phosphoric acid salt is added to both in the same proportion and in the same amount evenly. Among them, the method (iii) is preferred in consideration that the first and second agents have the same viscosity.
Further, in Example 12, it is preferred that the elastomer component (5) be used for the purpose of increasing the toughness of the resin composition. The material and use amount of the elastomer component are the same as those in Example 11.
Furthermore, in Example 12, various paraffins may be used in order to accelerate curing of the part that contacts the air. The material and use amount of the paraffins are the same as those in Example 10.
Also, for the purpose of improving the storage stability, various antioxidants including polymerization inhibitors and the like may be used. The material and use amount of the antioxidants are also the same as those in Example 10.
Further, to adjust the viscosity and adjust the flow resistance or flowability, fillers such as finely powdered silica may be used. In addition thereto, already known substances such as plasticizers, colorants, corrosion inhibitors and the like may be used as desired.
Also, the organic adhesive of Example 12 is preferably used as a two-pack type adhesive in the same manner as in Example 10.
Hereinafter, Example 12 will be further described in detail by Test Examples. The unit of use amount of each of the substances is expressed in part by mass. For the substances, the following abbreviations were used. As the ammonium polyphosphate, use was made of a commercially available finely powdered product treated with a thermosetting resin. The paraffin used had a melting point of about 56˚C.

[Abbreviations]

NBR: acrylonitrile/butadiene rubber
MBAS: methyl methacrylate/butadiene/acrylonitrile/styrene copolymer
Acidic phosphorus acid compound: acid phosphoxyethyl methacrylate

Moreover, various physical properties were determined as follows.

[Humidity resistance]

According to JIS K-6854 and in an environment of a temperature of 23˚C and a relative humidity of 50%, a mixture of equivalent amounts of the first agent and second agent was coated on one of two test pieces (200 mm x 25 mm x 0.5 mm, SECC steel plate). Thereafter, immediately after another test piece (200 mm x 25 mm x 0.5 mm, SECC steel plate) was superposed and plied on the coated test piece, the resultant was aged at room temperature for 24 hours to obtain a sample.

Next, the bonded test pieces were exposed in an environmental test machine at a temperature of 60˚C and at a humidity of 90% for 7 days, taken out therefrom and measured for adhesive strength under peel (unit: kN/m). The strength retention ratio of the sample relative to the adhesive strength under peel before the exposure was evaluated.

Note that the adhesive strength under peel of the sample (unit: kN/m) was measured in an environment of a temperature of 23˚C and a relative humidity of 50% at a drawing speed of 50 mm/minute.

[Flame retardancy]

The same as in Example 10.

[Workability]

In the humidity resistance tests, the case where the adhesive composition was easy to coat on a test piece was rated . and the case where the viscosity was high and its coating was difficult was rated x.

Test Example 6

A resin composition having the composition shown in Table 10 was prepared. With this resin composition, a two-pack flame retardant adhesive composition having the composition shown in Table 11 was prepared and evaluated for the physical properties. The results obtained are shown in table 11.

(Table 10)

| Number of Resin composition | A-1 |
|---|---|
| NBR | 9.5 |
| MBAS | 6.5 |
| Methyl methacrylate | 47.0 |
| 2-Hydroxymethyl methacrylate | 23.5 |
| Isobornyl acrylate | 7.5 |
| Cumene hydroperoxide | 5.0 |
| Paraffin | 0.5 |
| P-methoxyphenol | 0.5 |
| Number of Resin composition | A-2 |
| NBR | 9.5 |
| MBAS | 6.5 |
| Methyl methacrylate | 47.0 |
| 2-Hydroxyethyl methacrylate | 23.5 |

(continued)

| Number of Resin composition | A-2 |
|---|---|
| Isobornyl acrylate<br>Ethylenethiourea<br>Paraffin<br>Acidic phosphorus acid compound | 7.5<br>2.2<br>0.5<br>3.3 |
| The unit of amount used is part by mass. | |

(Table 11)

| Experiment No. | | | 1-1 |
|---|---|---|---|
| Amount used | The first agent | Resin composition A-1 | 100 |
| | | Ammonium polyphosphate | 45 |
| | The second agent | Resin composition A-2 | 100 |
| | | Ammonium polyphosphate | 45 |
| Evaluation | Peel strength before humidity resistance test (kN/m)<br>Peel strength after humidity resistance test (kN/m)<br>Strength retention (%) | | 6.9<br>4.8<br>70 |
| | Flame retardancy | | V-0 |
| The unit of amount used is part by mass. | | | |

Test Example 7

Tests were performed in the same manner as in Test Example 6 except that a two-pack flame retardant adhesive composition having the composition shown in Table 12 was prepared. The results obtained are shown in table 12.

(Table 12)

| Experiment No. | | | 2-1 | 2-2 | 1-1 | 2-3 |
|---|---|---|---|---|---|---|
| Amount used | The first agent | Resin composition A-1 | 100 | 100 | 100 | 100 |
| | | Ammonium polyphosphate | 0 | 30 | 45 | 60 |
| | The second agent | Resin composition A-2 | 100 | 100 | 100 | 100 |
| | | Ammonium polyphosphate | 0 | 30 | 45 | 60 |
| Evaluation | Peel strength before humidity resistance test (kN/m) | | 8.5 | 8.1 | 7.8 | 6.9 |
| | Workability | | 0 | 0 | 0 | 0 |
| | Flame retardancy | | Out | V-0 | V-0 | V-0 |
| Notes | | | Comparative example | Example | Example | Example |
| The unit of amount used is part by mass. | | | | | | |

Example 13

Hereinafter, Example 13 which is a specific example of the organic adhesive containing a flame retardant will be described.

The organic adhesive of Example 13 contains a resin composition containing a polymerizable vinyl monomer (1), a polymerization initiator (2), a reducing agent (3) and an optionally used elastomer component (6), a condensed phosphoric acid (4), and, optionally, a metal hydroxide (5). Note that the resin composition may contain paraffins and antioxidants.

The polymerizable vinyl monomer (1) used in Example 13 is the same as that in Example 11.

The material and use amount of the polymerizable initiator (2) used in Example 13 are the same as those in Example 10.

The material and use amount of the reducing agent (3) used in Example 13 are also the same as those in Example 10.

The condensed phosphoric acid (4) refers to phosphoric acid produced by polymerization of two or more $PO_4$ tetrahedrons through one or more co-owned oxygen atoms and includes polyphosphoric acid represented by the general formula $H_{n+2}P_nO_{3n+1}$ (n is an integer of 2 or more), metaphosphoric acid represented by the general formula $(HPO_3)_n$ (n is an integer of 3 or more), and ultraphosphoric acid represented by $xH_2O.yP_2O_5$ ($0 < x/y < 1$). Among them, polyphosphoric acid is preferred in respect of good flame retardancy and good curability.

The degree of condensation n of the condensed phosphoric acid (4) is preferably 10 or more, more preferably 100 or more. If the degree of condensation is less than 10, there is the fear that protons released in the resin composition will inhibit the curability.

The use amount of the condensed phosphoric acid is preferably 10 to 75 parts by mass, more preferably 15 to 50 parts by mass, per 100 parts by mass of the resin composition containing a polymerizable vinyl monomer (1), a polymerization initiator (2), a reducing agent (3) and an optionally used elastomer component (6). If it is less than 10 parts by mass, there is the fear that no sufficient flame retardancy is obtained while if it is above 75 parts by mass, the adhesion decreases accompanied by a considerable increase in viscosity, so that the operation of coating the adhesive composition becomes difficult.

Further, in Example 13, it is preferred to use the metal hydroxide (5) in respect of increase in flame retardancy. The material and use amount of the metal hydroxide (5) used in Example 13 are the same as those in Example 11.

The use amount of the condensed phosphoric acid and metal hydroxide is preferably 15 to 120 parts by mass, more preferably 30 to 100 parts by mass, per 100 parts by mass of the resin composition containing a polymerizable vinyl monomer (1), a polymerization initiator (2), a reducing agent (3) and an optionally used elastomer component (6).

The methods of adding the condensed phosphoric acid and the metal hydroxide are not particularly limited and include (i) a method in which different substances are added to the first agent and the second agent, (ii) a method in which they are added to only one of the agents, and (iii) a method in which they are added to both in the same proportion and in the same amount evenly. Among them, the method (iii) is preferred in consideration that the first and second agents have the same viscosity.

Further, in Example 13, it is preferred that the elastomer component (6) be used for the purpose of increasing the adhesion of the resin composition. The material and use amount of the elastomer component are the same as those in Example 11.

Furthermore, finely powdered silica and the like may be used for adjusting the viscosity or for adjusting the flow resistance or flowability.

Furthermore, various paraffins may be used in order to accelerate curing of the part that contacts the air. The material and use amount of the paraffins are the same as those in Example 10.

Also, for the purpose of improving the storage stability, various antioxidants including polymerization inhibitors and the like may be used. The material and use amount of the antioxidants are the same as those in Example 10.

Further, in addition thereto, already known substances such as plasticizers, colorants, corrosion inhibitors and the like may be used as desired.

Furthermore, the organic adhesive of Example 13 is preferably used as a two-pack type adhesive in the same manner as in Example 10.

Hereinafter, Example 13 will be further described in detail by Test Examples. The unit of use amount of each of the substances is expressed in part by mass. The abbreviations of the substances (NBR, MBAS, acidic phosphoric acid compound) are the same as those in Example 12. The paraffin used had a melting point of 56˚C.

The various physical properties were measured as follows.

[Viscosity]

The same as in Example 11.

[Tensile shearing adhesive strength]

The same as in Example 10.

[Flame retardancy]

The same as in Example 10.

Test Example 8

A resin composition of Example 13 having the composition shown in Table 10 was prepared. With this resin composition, a two-pack flame retardant adhesive composition having the composition shown in Table 13 was prepared and evaluated for the physical properties. The results obtained are shown in table 13.

(Table 13)

| Experiment No. | | | 1-1 | 1-2 | 1-3 | 1-4 | 1-5 |
|---|---|---|---|---|---|---|---|
| Amount used | The first agent | Resin composition A-1 | 100 | 100 | 100 | 100 | 100 |
| | | polyphosphoric acid (Degree of condensation: 1000 or more) | 30 | 30 | 45 | 45 | 0 |
| | | Aluminum hydroxide | 20 | 30 | 15 | 45 | 60 |
| | The second agent | Resin composition A-2 | 100 | 100 | 100 | 100 | 100 |
| | | Polyphosphoric acid (Degree of condensation: 1000 or more) | 30 | 30 | 45 | 45 | 0 |
| | | Aluminum hydroxide | 20 | 30 | 15 | 45 | 60 |
| Evaluation | Viscosity of the first agent (mPa·s) | | 27000 | 35000 | 38000 | 85000 | 106000 |
| | Viscosity of the second agent (mPa.s) | | 18000 | 34000 | 35000 | 75000 | 98000 |
| | Tensile shearing adhesive strength (MPa) | | 22.4 | 23.2 | 24.0 | 23.4 | 23.6 |
| | Flame retardancy | | V-0 | V-0 | V-0 | V-0 | Out |
| Notes | | | Example | Example | Example | Example | Comparative example |
| The unit of amount used is part by mass. | | | | | | | |

Test Example 9

Tests were performed in the same manner as in Test Example 8 except that a two-pack flame retardant adhesive composition having the composition shown in Table 14 was prepared. The results obtained are shown in table 14.

(Table 14)

| Experiment No. | | | 2-1 | 1-4 |
|---|---|---|---|---|
| Amount used | The first agent | Resin composition A-1 | 100 | 100 |
| | | Polyphosphoric acid (Degree of condensation: 1000 or more) | 15 | 45 |
| | | aluminum hydroxide | 45 | 45 |
| | The second agent | Resin composition A-2 | 100 | 100 |
| | | Polyphosphoric acid (Degree of condensation: 1000 or more) | 15 | 45 |
| | | Aluminum hydroxide | 45 | 45 |
| Evaluation | Viscosity of the first agent (mPa·s) | | 45000 | 85000 |
| | Viscosity of the second agent (mPa·s) | | 40000 | 75000 |
| | Tensile shearing adhesive strength (MPa) | | 22.8 | 23.4 |
| | Flame retardancy | | V-0 | V-0 |
| Notes | | | Example | Example |
| The unit of amount used is part by mass. | | | | |

Example 14

Hereinafter, Example 14 which is a specific example of the organic adhesive containing a flame retardant will be described.

The organic adhesive of Example 14 contains a resin composition containing a polymerizable vinyl monomer (1), a polymerization initiator (2), a reducing agent (3) and an optionally used elastomer component (6), a phosphoric acid salt (4), and a metal hydroxide (5). Note that the resin composition may contain paraffins and antioxidants.

The polymerizable vinyl monomer (1) used in Example 14 is the same as that in Example 11.

The material and use amount of the polymerizable initiator (2) used in Example 14 are the same as those in Example 10.

The material and use amount of the reducing agent (3) used in Example 14 are also the same as those in Example 10.

The material and use amount of the phosphoric acid salt used in Example 14 are the same as those in Example 12.

The material of the phosphoric acid salt used in Example 14 is the same as that in Example 11.

The use amount of the metal hydroxide is preferably 5 to 75 parts by mass, more preferably 10 to 30 parts by mass, per 100 parts by mass of the resin composition containing a polymerizable vinyl monomer (1), a polymerization initiator (2), a reducing agent (3) and an optionally used elastomer component (6). If it is less than 5 parts by mass, there is the fear that no sufficient flame retardancy is obtained while if it is above 75 parts by mass, there is the fear that adhesive strength under peel and adhesive strength under impact are decreased accompanied by a considerable increase in viscosity, so that the operation of coating the adhesive composition becomes difficult.

The method of adding the phosphoric acid salt and the metal hydroxide is not particularly limited and includes (i) a method in which different substances are added to each of the first agent and the second agent, (ii) a method in which they are added to only one of the agents, and (iii) a method in which they are added to both in the same proportion and in the same amount evenly. Among them, the method (iii) is preferred in consideration that the first and second agents have the same viscosity.

Further, in Example 14, it is preferred that the elastomer component (6) be used for the purpose of increasing the toughness of the resin composition. The elastomer component refers to a polymeric substance having rubber elasticity at room temperature and is preferably one that can be dissolved or dispersed in (meth)acrylic monomers.

Such an (6) elastomer component includes: various synthetic rubbers such as an acrylonitrile/butadiene/methacrylic acid copolymer, an acrylonitrile/butadiene/methyl methacrylate copolymer, a methylmethacrylate/butadiene/acrylonitrile/styrene copolymer, a methyl methacrylate/butadiene/styrene copolymer (MBS), an acrylonitrile/styrene/butadiene copolymer, as well as an acrylonitrile/butadiene rubber, a linear polyurethane, a styrene/butadiene rubber, a chloroprene rubber and a butadiene rubber; natural rubbers; styrene themoplastic elastomers such as a styrene/polybutadiene/styrene synthetic rubber; olefin thermoplastic elastomers such as a polyethylene/EPDM synthetic rubber; as well

as urethane thermoplastic elastomers such as caprolactone type-, adipate type-, and PTMG type-urethane thermoplastic elastomers; polyester thermoplastic elastomers such as a polybutylene terephthalate/polytetramethylene glycol multi block polymer; polyamide thermoplastic elastomers such as a nylon/polyol block copolymer and a nylon/polyester block copolymer; 1,2-polybutadiene thermoplastic elastomers; as well as PVC thermoplastic elastomers. Those elastomer components can be used alone, or in combination of two or more of the above-mentioned elastomers, so long as they are compatible with each other.

A polybutadiene modified with a methacryl group at the terminal can be also used.

Among those, the methyl methacrylate/butadiene/acrylonitrile/styrene copolymer, and/or the acrylonitrile/butadiene rubber are preferred from the viewpoint of solubility to a resin composition and adhesion. More preferably, the methyl methacrylate/butadiene/acrylonitrile/styrene copolymer, and the acrylonitrile/butadiene rubber are used in combination.

The use amount of the elastomer component is the same as that in Example 10.

Furthermore, to adjust the viscosity and adjust the flow resistance or flowability, finely powdered silica and the like may be used.

Various paraffins may be used in order to accelerate curing of the part that contacts the air. The material and use amount of the paraffins are the same as those in Example 10.

Also, for the purpose of improving the storage stability, various antioxidants including polymerization inhibitors and the like may be used. The material and use amount of the antioxidants are also the same as those in Example 10.

Further, to adjust the viscosity and adjust the flow resistance and flowability, fillers such as finely powdered silica may be used. In addition thereto, already known substances such as plasticizers, colorants, corrosion inhibitors and the like may be used as desired.

Furthermore, the organic adhesive of Example 14 is preferably used as a two-pack type adhesive in the same manner as in Example 10.

Hereinafter, Example 14 will be described in more detail by Test Examples. The unit of use amount of each of the substances is expressed in part by mass. The abbreviations of the substances (NBR, MBAS, acidic phosphoric acid compound) are the same as those in Example 12. As the ammonium polyphosphate, use was made of a commercially available finely powdered product treated with a thermosetting resin. The paraffin used had a melting point of 56˚C.

Also, the various physical properties were measured as follows.

[Humidity resistance]

The same as in Example 12.

[Flame retardancy]

The same as in Example 10.

[Workability]

The same as in Example 12.

Test Example 10

A resin composition having the composition shown in Table 15 was prepared. With this resin composition, a two-pack flame retardant adhesive composition having the composition shown in Table 16 was prepared and evaluated for the physical properties. The results obtained are shown in table 16.

(Table 15)

| Number of Resin composition | A-1 | B-1 |
|---|---|---|
| NBR | 9.5 | 10.0 |
| MBAS | 6.5 | 6.7 |
| Methyl methacrylate | 47.0 | 46.7 |
| 2-Hydroxymethyl methacrylate | 23.5 | 15.6 |
| Isobornyl acrylate | 7.5 | - |
| Isobornyl methacrylate | - | 15.6 |
| Cumene hydroperoxide | 5.0 | 4.6 |

(continued)

| Number of Resin composition | A-1 | B-1 |
|---|---|---|
| Paraffin | 0.5 | 0.4 |
| P-methoxyphenol | 0.5 | 0.4 |
| Number of Resin composition | A-2 | B-2 |
| NBR | 9.5 | 10.4 |
| MBAS | 6.5 | 7.0 |
| Methyl methacrylate | 47.0 | 48.3 |
| 2-Hydroxyethyl methacrylate | 23.5 | 16.2 |
| Isobornyl acrylate | 7.5 | - |
| Isobornyl methacrylate | - | 16.2 |
| Ethylenethiourea | 2.2 | - |
| Vanadylacetylacetonate | - | 0.6 |
| Paraffin | 0.5 | 0.4 |
| Acidic phosphorus acid compound | 3.3 | 0.9 |
| The unit of amount used is part by mass. | | |

(Table 16)

| Experiment No. | | | 1-1 | 1-2 |
|---|---|---|---|---|
| Amount used | The first agent | Resin composition A-1 | 100 | - |
| | | Resin composition B-1 | - | 100 |
| | | Ammonium polyphosphate | 45 | 45 |
| | | Aluminum hydroxide | 15 | 15 |
| | The second agent | Resin composition A-2 | 100 | - |
| | | Resin composition B-2 | - | 100 |
| | | Ammonium polyphosphate | 45 | 45 |
| | | Aluminum hydroxide | 15 | 15 |
| Evaluation | Peel strength before humidity resistance test (kN/m) | | 7.2 | 8.3 |
| | Peel strength after humidify resistance test (kN/m) | | 4.9 | 6.0 |
| | Strength retention (%) | | 68 | 72 |
| | Flame retardancy | | V-0 | V-0 |
| The unit of amount used is part by mass. | | | | |

Test Example 11

Tests were performed in the same manner as in Test Example 10 except that a two-pack flame retardant adhesive composition having the composition shown in Table 17 was prepared. The results obtained are shown in table 17.

(Table 17)

| Experiment No. | | | 2-1 | 2-2 | 1-2 | 2-3 |
|---|---|---|---|---|---|---|
| Amount used | The first agent | Resin composition B-1 | 100 | 100 | 100 | 100 |
| | | Ammonium polyphosphate<br>Aluminum hydroxide | 0<br>15 | 30<br>15 | 45<br>15 | 60<br>15 |
| | The second agent | Resin composition B-2 | 100 | 100 | 100 | 100 |
| | | Ammonium polyphosphate<br>Aluminum hydroxide | 0<br>15 | 30<br>15 | 45<br>15 | 60<br>15 |
| Evaluation | Peel strength before humidity resistance test (kN/m) | | 8.9 | 8.6 | 8.3 | 7.3 |
| | Workability | | ○ | ○ | ○ | ○ |
| | Flame retardancy | | Out | V-0 | V-0 | V-0 |
| Notes | | | Comparative example | Example | Example | Example |
| The unit of amount used is part by mass. | | | | | | |

Test Example 12

Tests were performed in the same manner as in Test Example 10 except that a two-pack flame retardant adhesive composition having the composition shown in Table 18 was prepared. The results obtained are shown in table 18.

(Table 18)

| Experiment No. | | | 3-1 | 1-2 | 3-2 |
|---|---|---|---|---|---|
| Amount used | The first agent | Resin composition B-1 | 100 | 100 | 100 |
| | | Ammonium polyphosphate<br>Aluminum hydroxide | 45<br>10 | 45<br>15 | 45<br>30 |
| | The second agent | Resin composition B-2 | 100 | 100 | 100 |
| | | Ammonium polyphosphate<br>Aluminum hydroxide | 45<br>10 | 45<br>15 | 45<br>30 |
| Evaluation | Peel strength before humidity resistance test (kN/m) | | 8.5 | 8.3 | 7.2 |
| | workability | | ○ | ○ | ○ |
| | Flame retardancy | | V-0 | V-0 | V-0 |
| Notes | | | Example | Example | Example |
| The unit of amount used is part by mass. | | | | | |

**Claims**

**1.** A landing door for an elevator, comprising:

a front panel (21), and

a reinforcing member (22) bonded to the backside of the front panel through an adhesive layer (23) made of an organic adhesive containing a flame retardant.

2. A landing door for an elevator according to claim 1, wherein the flame retardant is a non-halogen flame retardant.

3. A landing door for an elevator according to claim 2, wherein the non-halogen flame retardant is ammonium polyphosphate.

4. A landing door for an elevator according to claim 3, wherein the organic adhesive contains 20 to 43% by weight of the ammonium polyphosphate.

5. A landing door for an elevator according to claim 1, wherein the organic adhesive contains a polymerizable vinyl monomer, a polymerization initiator, a reducing agent and the flame retardant, and
wherein the organic adhesive contains 25 to 75 parts by mass of the flame retardant per 100 parts by mass of the sum of the polymerizable vinyl polymer, the polymerization initiator, and the reducing agent.

6. A landing door for an elevator according to claim 5, wherein the polymerizable vinyl monomer contains a first polymerizable vinyl monomer whose homopolymer has a glass transition temperature of 0˚C or less and a second polymerizable vinyl monomer whose homopolymer has a glass transition temperature of above 0˚C.

7. A landing door for an elevator according to claim 5, wherein the organic adhesive further contains an elastomer component.

8. A landing door for an elevator according to claim 1, further comprising a primer layer (25) provided between the adhesive layer and the front panel.

9. A landing door for an elevator according to claim 8, wherein the primer layer (25) comprises an acidic phosphoric acid compound.

10. A landing door for an elevator according to claim 1, further comprising a thermoplastic resin layer (26) provided between the adhesive layer and the reinforcing member.

11. A landing door for an elevator according to claim 10, wherein the softening temperature of the thermoplastic resin layer (26) is 60˚C to 100˚C.

12. A landing door for an elevator according to claim 1, wherein the organic adhesive comprises a two-pack room temperature curing acrylic adhesive as a main component.

13. A landing door for an elevator according to claim 1, wherein the organic adhesive contains a thermosetting resin having a glass transition temperature of 50 to 120˚C.

14. A landing door for an elevator according to claim 1, wherein the organic adhesive contains a thermoplastic resin having a softening temperature of 60 to 100˚C.

**Patentansprüche**

1. Schachttüre für einen Aufzug, umfassend:

eine Frontplatte (21), und
ein Verstärkungselement (22), das an die Rückseite der Frontplatte über eine Klebeschicht (23) gebunden ist, die aus einem organischen Klebstoff, der ein Flammhemmittel enthält, hergestellt wurde.

2. Schachttüre für einen Aufzug gemäß Anspruch 1, worin das Flammhemmittel ein nicht-halogenhaltiges Flammhemmittel ist.

3. Schachttüre für einen Aufzug gemäß Anspruch 2, worin das nicht-halogenhaltige Flammhemmittel Ammoniumpolyphosphat ist.

4. Schachttüre für einen Aufzug gemäß Anspruch 3, worin der organische Klebstoff 20 bis 43 Gew.% an Ammoniumpolyphosphat enthält.

5. Schachttüre für einen Aufzug gemäß Anspruch 1, worin der organische Klebstoff ein polymerisierbares Vinyl-Monomer, einen Polymerisations-Initiator, ein Reduktionsmittel und das Flammhemmittel enthält, und
worin der organische Klebstoff 25 bis 75 Gew.-Teile der Flammhemmittels pro 100 Gew.-Teile der Summe des polymerisierbaren Vinyl-Monomers, des PolymerisationsInitiators und des Reduktionsmittels enthält.

6. Schachttüre für einen Aufzug gemäß Anspruch 5, worin das polymerisierbare Vinyl-Monomer ein erstes polymerisierbares Vinyl-Monomer, dessen Homopolymer eine Glasübergangstemperatur von 0˚C oder weniger hat, und ein zweites polymerisierbares Vinyl-Monomer dessen Homopolymer eine Glasübergangstemperatur über 0˚C hat, umfaßt.

7. Schachttüre für einen Aufzug gemäß Anspruch 5, worin der organische Klebstoff weiterhin eine elastomere Komponente enthält.

8. Schachttüre für einen Aufzug gemäß Anspruch 1, die weiterhin eine Grundierungsschicht (25), die zwischen der Klebeschicht und der Frontplatte vorgesehen ist, umfaßt.

9. Schachttüre für einen Aufzug gemäß Anspruch 8, worin die Grundierungsschicht (25) eine saure Phosphorsäure-Verbindung umfaßt.

10. Schachttüre für einen Aufzug gemäß Anspruch 1, die weiterhin eine thermoplastische Harzschicht (26), die zwischen der Klebeschicht und dem Verstärkungselement vorgesehen ist, umfaßt.

11. Schachttüre für einen Aufzug gemäß Anspruch 10, worin die Erweichungstemperatur der thermoplastischen Harzschicht (26) 60˚C bis 100˚C ist.

12. Schachttüre für einen Aufzug gemäß Anspruch 1, worin der organische Klebstoff als Hauptkomponente einen bei Raumtemperatur härtenden Zweikomponenten-Acrylklebstoff umfaßt.

13. Schachttüre für einen Aufzug gemäß Anspruch 1, worin der organische Klebstoff ein wärmehärtendes Harz mit einer Glasübergangstemperatur von 50 bis 120˚C enthält.

14. Schachttüre für einen Aufzug gemäß Anspruch 1, worin der organische Klebstoff ein thermoplastische Harz mit einer Erweichungstemperatur von 60 bis 100˚C enthält.

## Revendications

1. Porte palière d'ascenseur, comprenant :

   un panneau frontal (21), et
   un élément de renfort (22) collé au côté arrière du panneau frontal au moyen d'une couche d'adhésif (23) constituée d'un adhésif organique contenant un retardateur de flammes.

2. Porte palière d'ascenseur selon la revendication 1, dans laquelle le retardateur de flammes est un retardateur de flammes non halogène.

3. Porte palière d'ascenseur selon la revendication 2, dans laquelle le retardateur de flammes non halogène est du polyphosphate d'ammonium.

4. Porte palière d'ascenseur selon la revendication 3, dans laquelle l'adhésif organique contient de 20 à 43 % en poids du polyphosphate d'ammonium.

5. Porte palière d'ascenseur selon la revendication 1, dans laquelle l'adhésif organique contient un monomère vinylique polymérisable, un initiateur de polymérisation, un agent de réduction et le retardateur de flammes, et
dans laquelle l'adhésif organique contient de 25 à 75 parties en poids du retardateur de flammes par 100 parties

en poids de la somme du polymère vinylique polymérisable, de l'initiateur de polymérisation, et de l'agent de réduction.

6. Porte palière d'ascenseur selon la revendication 5, dans laquelle le monomère vinylique polymérisable contient un premier monomère vinylique polymérisable dont l'homopolymère a une température de transition vitreuse égale à 0 ˚C ou moins, et un second monomère vinylique polymérisable dont l'homopolymère a une température de transition vitreuse supérieure à 0 ˚C.

7. Porte palière d'ascenseur selon la revendication 5, dans laquelle l'adhésif organique contient également un composant élastomère.

8. Porte palière d'ascenseur selon la revendication 1, comprenant également une couche de primaire (25) disposée entre la couche d'adhésif et le panneau frontal.

9. Porte palière d'ascenseur selon la revendication 8, dans laquelle la couche de primaire (25) comprend un composé d'acide phosphorique acide.

10. Porte palière d'ascenseur selon la revendication 1, comprenant également une couche de résine thermoplastique (26) disposée entre la couche d'adhésif et l'élément de renfort.

11. Porte palière d'ascenseur selon la revendication 10, dans laquelle la température de ramollissement de la couche de résine thermoplastique (26) va de 60 ˚C à 100 ˚C.

12. Porte palière d'ascenseur selon la revendication 1, dans laquelle l'adhésif organique comprend un adhésif acrylique de durcissement à température ambiante à deux composants comme composant principal.

13. Porte palière d'ascenseur selon la revendication 1, dans laquelle l'adhésif organique contient une résine thermodurcissable ayant une température de transition vitreuse allant de 50 à 120 ˚C.

14. Porte palière d'ascenseur selon la revendication 1, dans laquelle l'adhésif organique contient une résine thermoplastique ayant une température de ramollissement allant de 60 à 100 ˚C.

FIG. 1

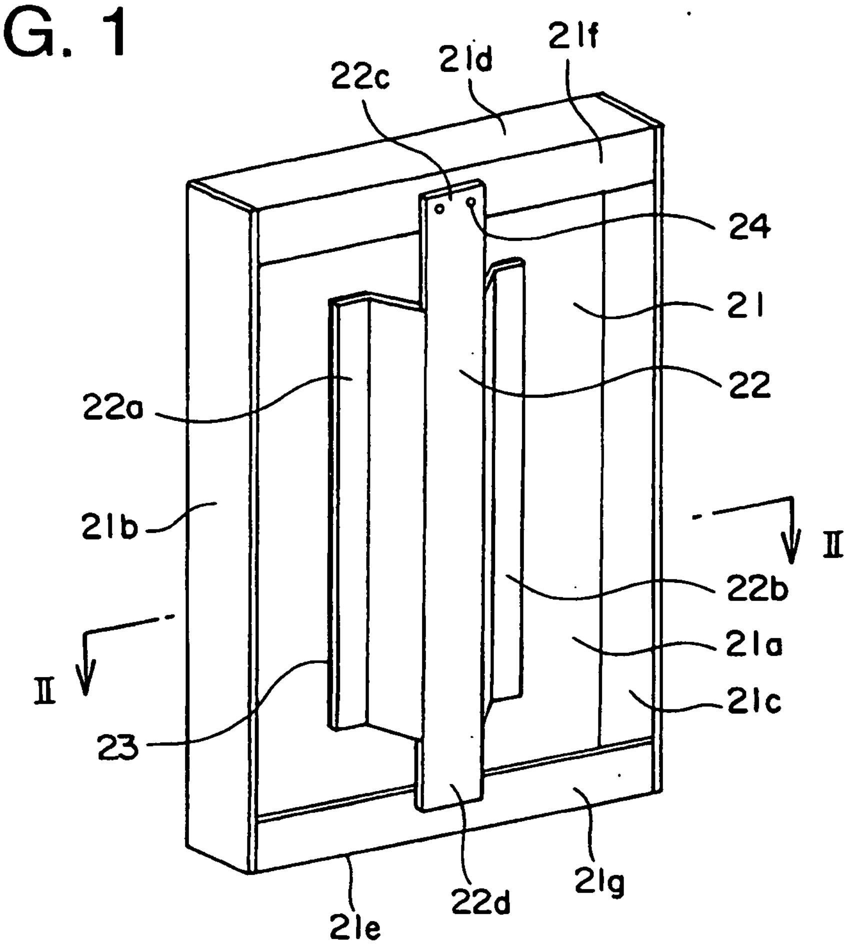
22c
21d
21f
24
21
22
22a
21b
II
II
22b
21a
21c
23
21g
22d
21e

FIG. 2

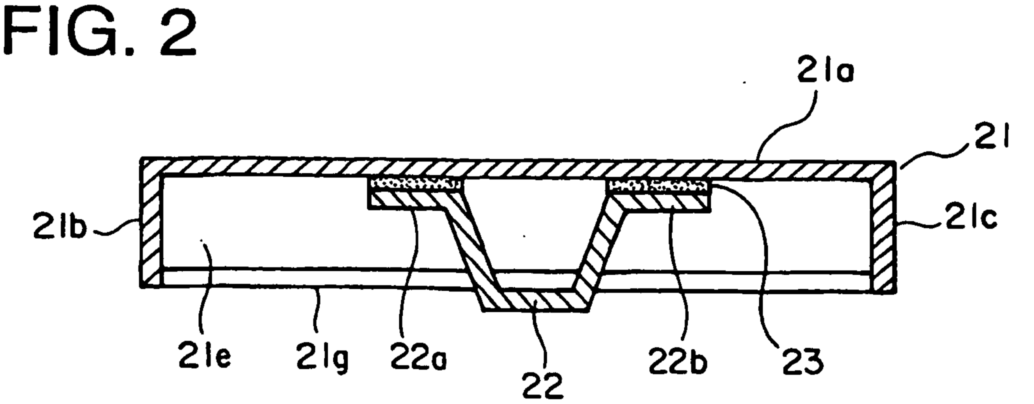
21a
21
21b
21c
21e
21g
22a
22
22b
23

FIG. 3

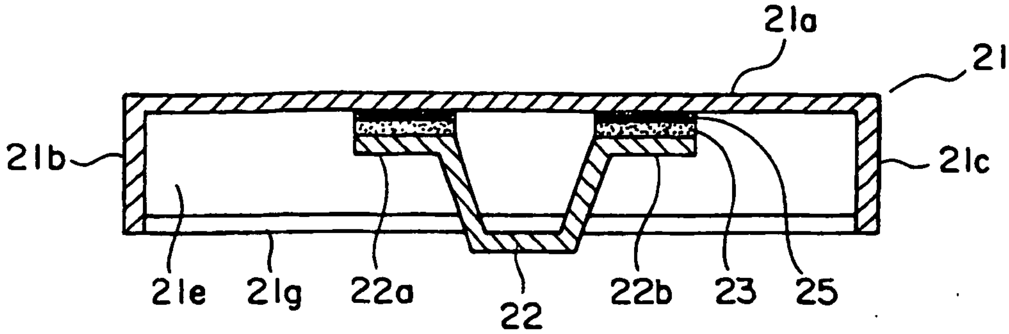


FIG. 4

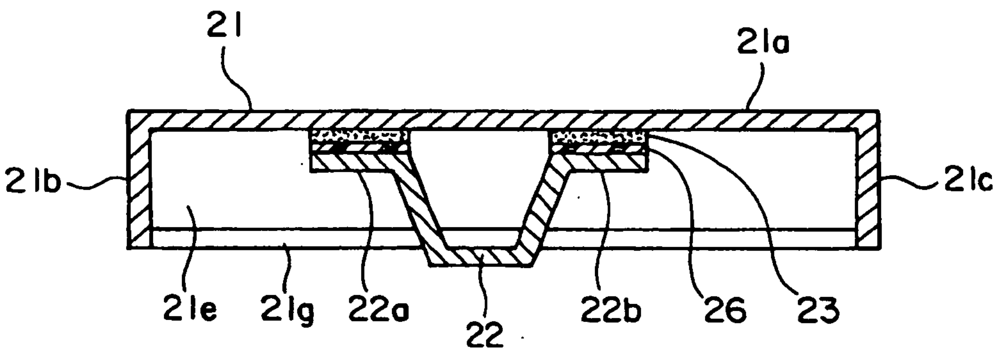


FIG. 5

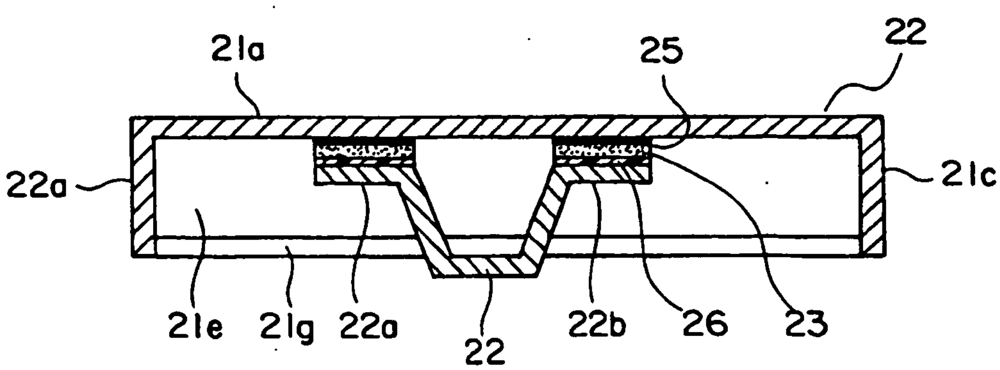

FIG. 6

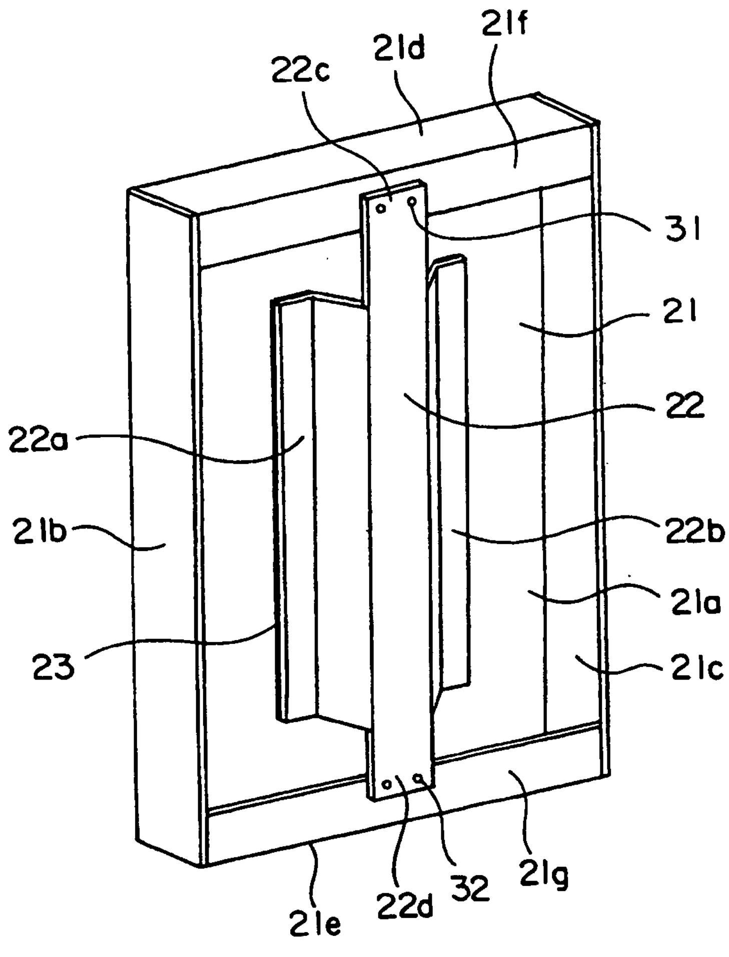

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP U57120574 A
- EP 1258518 A